# EUROPEAN PATENT APPLICATION

(11) **EP 4 611 454 A1**
(43) Date of publication of application: **03.09.2025**
(21) Application number: 23881990.8
(22) Date of filing: 27.10.2023
(51) Int. Cl.: H04W 72/04

(54) **RESOURCE INDICATION METHOD, FIRST NODE, SECOND NODE, AND STORAGE MEDIUM**

(30) Priority: 28.10.2022 CN 202211338451
(71) Applicant: ZTE Corporation, Shenzhen, Guangdong 518057 (CN)
(72) Inventor: CHEN, Jie, Shenzhen, Guangdong 518057 (CN); LU, Youxiong, Shenzhen, Guangdong 518057 (CN); MIAO, Ting, Shenzhen, Guangdong 518057 (CN); HE, Haigang, Shenzhen, Guangdong 518057 (CN); XING, Weimin, Shenzhen, Guangdong 518057 (CN); BI, Feng, Shenzhen, Guangdong 518057 (CN)
(74) Representative: Aipex B.V.
(86) International application number: PCT/CN2023/127336
(87) International publication number: WO 2024/088415

(57) **Abstract**

Provided are a resource indication method, a first node, a second node, and a storage medium. The resource indication method is applied to the first node. The method includes determining first indication information of a physical transmission resource and second indication information of the physical transmission resource, where the first indication information includes subchannel information of a frequency domain of the physical transmission resource, and the second indication information includes other frequency domain indication information of the physical transmission resource other than the first indication information in the frequency domain; transmitting control information including the first indication information and the second indication information.

## Description

### TECHNICAL FIELD

The present application relates to the technical field of communications, for example, to a resource indication method, a first node, a second node, and a storage medium.

### BACKGROUND

Interlace-based data transmission has been granted to a sidelink unlicensed (SL-U) system at a conference of the 3rd Generation Partnership Project (3GPP), and the frequency domain resource allocation granularity of SL data is subchannel.

A sidelink (SL) user equipment (UE) performs communications based on an SL resource pool and does not require a base station for forwarding data. The smallest unit for data scheduling in the SL resource pool is the subchannel.

In the New Radio (NR) Release 16/17 (Rel-16/17), the SL resource pool is formed by W consecutive subchannels in a frequency domain according to the configuration or preconfiguration information of the system. Usually, one piece of data occupies several consecutive subchannels, and each of the subchannels is several consecutive resource blocks (RB) determined according to the configuration or preconfiguration information.

If an SL-U continues using an indication method for frequency domain resource indication information based on consecutive subchannel indexes in the NR Rel-16/17, resources cannot be used flexibly.

### SUMMARY

The present application provides a resource indication method, a first node, a second node, and a storage medium.

In a first aspect, an embodiment of the present application provides a resource indication method. The method is applied to a first node and includes determining first indication information of a physical transmission resource and second indication information of the physical transmission resource, where the first indication information includes subchannel information of the physical transmission resource in a frequency domain, and the second indication information includes other frequency domain indication information of the physical transmission resource other than the first indication information in the frequency domain; and transmitting control information including the first indication information and the second indication information.

In a second aspect, an embodiment of the present application provides a resource indication method. The method is applied to a second node and includes acquiring control information including first indication information and second indication information, where the first indication information includes subchannel information of a frequency domain of a physical transmission resource, and the second indication information includes other frequency domain indication information of the physical transmission resource other than the first indication information in the frequency domain; and determining a frequency domain location of the physical transmission resource based on the first indication information and the second indication information.

In a third aspect, an embodiment of the present application provides a first node. The first node includes one or more processors and a storage apparatus configured to store one or more programs. The one or more programs, when executed by the one or more processors, are configured to cause the one or more processors to perform the resource indication method applied to the first node and provided in the embodiment of the present application.

In a fourth aspect, an embodiment of the present application provides a second node. The second node includes one or more processors and a storage apparatus configured to store one or more programs. The one or more programs, when executed by the one or more processors, are configured to cause the one or more processors to perform the resource indication method applied to the second node and provided in the embodiment of the present application.

In a fifth aspect, an embodiment of the present application provides a storage medium storing a computer program that, when executed by a processor, is configured to cause the processor to perform any resource indication method provided in the embodiments of the present application.

### BRIEF DESCRIPTION OF DRAWINGS

FIG. 1 is a schematic diagram of interlaces and resource block sets in a frequency domain according to an embodiment of the present application.
FIG. 2 is a schematic diagram of a communication scenario based on an SL resource pool according to an embodiment of the present application.
FIG. 3 is a schematic diagram of a resource pool according to an embodiment of the present application.
FIG. 4 is a schematic diagram of a subchannel determination manner according to an embodiment of the present application.
FIG. 5 is another schematic diagram of a subchannel determination manner according to an embodiment of the present application.
FIG. 6 is a flowchart of a resource indication method according to an embodiment of the present application.
FIG. 7A is another flowchart of a resource indication method according to an embodiment of the present application.
FIG. 7B is a schematic diagram of resources in a communication resource pool according to an embodiment of the present application.
FIG. 7C is a schematic diagram of a subchannel numbering manner according to an embodiment of the present application.
FIG. 7D is another schematic diagram of a subchannel numbering manner according to an embodiment of the present application.
FIG. 7E is a schematic diagram of the location of a physical sidelink shared channel (PSSCH) resource according to an embodiment of the present application.
FIG. 7F is another schematic diagram of the location of a PSSCH resource according to an embodiment of the present application.
FIG. 7G is another schematic diagram of the location of a PSSCH resource according to an embodiment of the present application.
FIG. 7H is another schematic diagram of the location of a PSSCH resource according to an embodiment of the present application.
FIG. 7I is another schematic diagram of the location of a PSSCH resource according to an embodiment of the present application.
FIG. 7J is a schematic diagram of the frequency domain resource location of a PSSCH resource according to an embodiment of the present application.
FIG. 7K is another schematic diagram of the frequency domain resource location of a PSSCH resource according to an embodiment of the present application.
FIG. 8 is a schematic diagram illustrating the structure of a resource indication apparatus according to an embodiment of the present application.
FIG. 9 is another schematic diagram illustrating the structure of a resource indication apparatus according to an embodiment of the present application.
FIG. 10 is a schematic diagram illustrating the structure of a first node according to an embodiment of the present application.
FIG. 11 is a schematic diagram illustrating the structure of a second node according to an embodiment of the present application.

### DETAILED DESCRIPTION

Embodiments of the present application are described hereinafter in conjunction with the drawings.

Operations illustrated in the flowcharts among the drawings may be performed by, for example, a computer system capable of executing a set of computer-executable instructions. Moreover, though logical sequences are illustrated in the flowcharts, in some cases, the operations illustrated or described may be performed in sequences different from the sequences described herein.

In the New Radio unlicensed (NR-U), M consecutive interlaces are defined on a carrier. RBs in each interlace are equidistantly spaced, and different interlaces are distributed in a comb-shaped manner in a frequency domain and numbered from 0 to M-1.

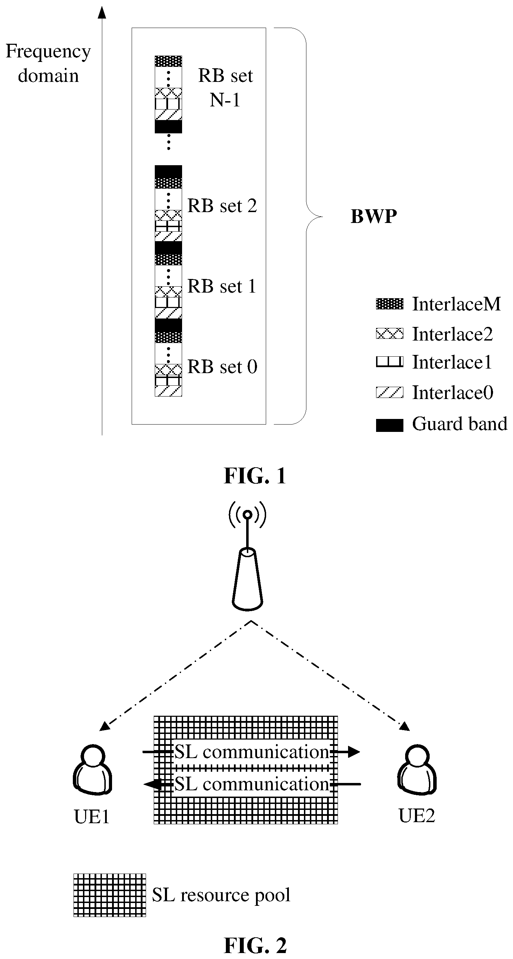

FIG. 1 is a schematic diagram of interlaces and resource block sets in a frequency domain according to an embodiment of the present application. As shown in FIG. 1, N consecutive resource block sets (RB set) are also defined in the frequency domain and numbered from 0 to N-1. When data resources are indicated, a two-level indication manner is adopted for the NR-U, that is, X + Y, where X represents interlaces used by physical uplink shared channel (PUSCH) resources, and Y represents consecutive RB sets used by the PUSCH resources. In this manner, a terminal can determine the frequency domain resource location of data within a bandwidth part (BWP) according to indication information.

As shown in FIG. 1, the smallest indication unit in the frequency domain is all the physical RB resources within one RB set under one interlace.

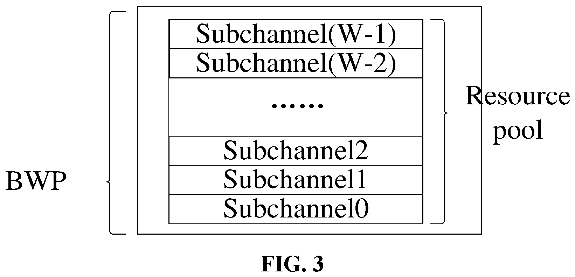

FIG. 2 is a schematic diagram of a communication scenario based on an SL resource pool according to an embodiment of the present application. As shown in FIG. 2, the SL UE performs the communications based on the SL resource pool and does not require the base station for forwarding the data. The smallest unit for the data scheduling in the SL resource pool is the subchannel. In a 3GPP Rel-16/Rel-17 SL, the SL resource pool is formed by the W consecutive subchannels in the frequency domain according to the configuration or preconfiguration information of the system. Usually, the one piece of data occupies the several consecutive subchannels, and each of the subchannels is the several consecutive RBs determined according to the configuration or preconfiguration information. FIG. 3 is a schematic diagram of a resource pool according to an embodiment of the present application. The resource pool is configured as shown in FIG. 3.

When transmission resources of data of the SL UE are determined, there are two modes, namely mode 1 and mode 2. Mode 1 indicates that resources of transmission data of a UE are scheduled by the base station and notified to a transmitting UE through downlink control information (DCI). Mode 2 indicates that the resources of the transmission data of the UE are determined by the UE. In mode 1, the DCI indicates the frequency domain resource location of a physical sidelink shared channel (PSSCH) of the transmitting UE, and the transmitting UE indicates the frequency domain location of the PSSCH in the SL. A difference lies in that the DCI is required to additionally indicate the frequency domain location of a first subchannel of a first PSSCH while sidelink control information (SCI) does not have this requirement because SCI of the first PSSCH in the SL requires blind detection, and a first RB of the SCI is often aligned with a first RB of the first subchannel of the PSSCH. Therefore, the SCI can save one indication overhead compared with the DCI in PSSCH frequency domain resource indication.

Regardless of the resource determination manner in mode 1 or mode 2, after the transmitting UE determines resources of the PSSCH in a physical layer, it is necessary to indicate resource location information to a receiving UE through an indication domain in the SCI. When PSSCH frequency domain resources are indicated, it is only necessary to indicate the starting location of subchannels occupied by data in the frequency domain and the number of subchannels to determine the resource location of the SL data. At least one subchannel is used for data transmission. After determining the frequency domain location of its data, the transmitting UE indicates frequency domain information of one or more PSSCH resources reserved by the SCI through subchannel index-based frequency resource indicator value (FRIV) indication information in the SCI.

If the SL-U continues using a conventional NR SL frequency domain resource indication method, after subchannel numbering resources are determined, resources that the SL can use cannot be indicated effectively. Therefore, the present application provides a method that causes the base station or an SL-U UE to flexibly indicate resources used for sidelink communication, thereby effectively improving resource utilization efficiency.

The interlace-based data transmission has been granted to the SL-U system at the conference of 3GPP, and the frequency domain resource allocation granularity of the SL data is the subchannel. Therefore, an SL-U resource pool is required to support interlace-based subchannels, and physical interlace resources corresponding to the subchannels are required to be determined on frequency domain resources in the resource pool, thereby determining the interlace-based subchannels and transmitting the SL data on a PSSCH frequency domain resource formed by L subchannels. Relevant subchannel determination manners are divided into at least two major types.

In manner 1, interlaced resource blocks (IRB) index numbering is first used, and then resource block (RB) set index numbering is used for determining subchannels, thereby determining the N subchannels in an SL communication resource pool.

In manner 2, the RB set index numbering is first used, and then the interlaced resource blocks index numbering is used for determining subchannels, thereby determining the N subchannels in the SL communication resource pool.

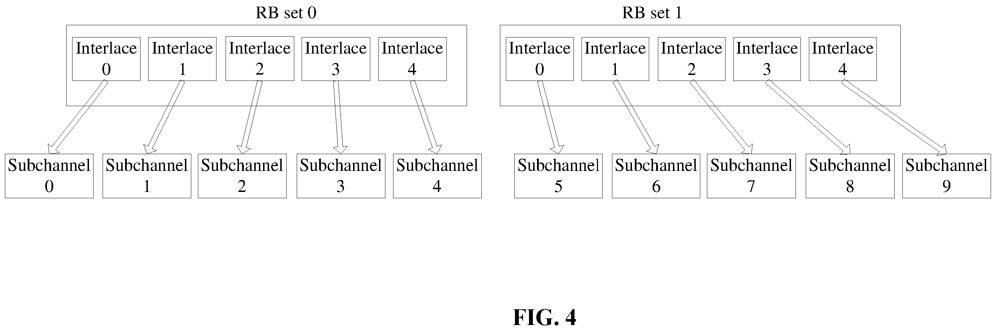

FIG. 4 is a schematic diagram of a subchannel determination manner according to an embodiment of the present application. Referring to FIG. 4, the subchannel determination manner adopts manner 1. It is assumed that the subcarrier space (SCS) of a carrier where the SL-U resource pool is located is 30 k, two RB sets are provided, and one subchannel corresponds to one interlace resource within one RB set.

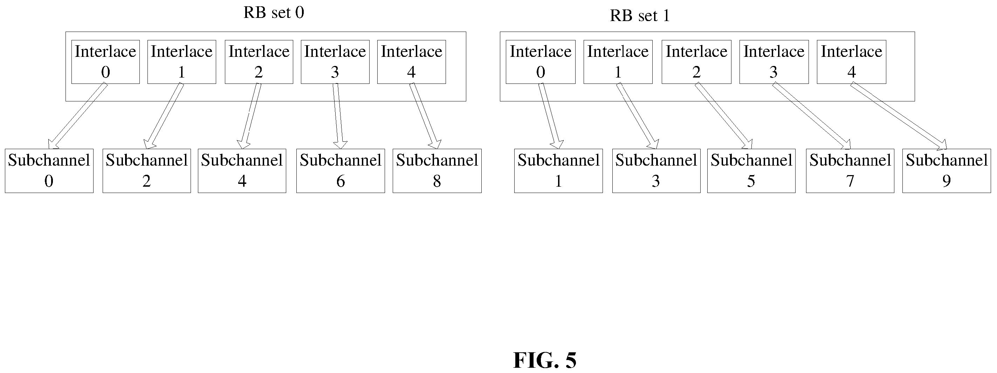

FIG. 5 is another schematic diagram of a subchannel determination manner according to an embodiment of the present application. Referring to FIG. 5, the subchannel determination manner adopts manner 2. It is assumed that the SCS of the carrier where the SL-U resource pool is located is 30 k, the two RB sets are provided, and one subchannel corresponds to one interlace resource within one RB set.

After subchannels are determined, an SL-U device may indicate the frequency domain location of the PSSCH in the sidelink control information based on subchannel indexes. PSSCH frequency domain resources reserved by a legacy NR Rel-16/17 SL UE are stipulated to use L consecutive subchannels, and a frequency domain resource indication manner is the frequency resource indicator value (FRIV). The FRIV may determine the frequency domain location of reserved resources by indicating the starting point and the number L of the resources reserved by the UE. However, continuing using this indication rule in the SL-U system brings some problems. For example, it is assumed that the SCS of the carrier where the SL-U resource pool is located is 30 k, two RB sets are provided, and the PSSCH requires two consecutive subchannel resources. In this case, the existing problems include the following.

If the subchannels are determined using manner 1, some resources with consecutive numbers may not be available, such as subchannel 4 and subchannel 5; some resources with non-consecutive numbers may be used but cannot be directly indicated, such as subchannel 0 and subchannel 5.

If the subchannels are determined using manner 2, some resources with consecutive numbers may also not be available, such as subchannel 1 and subchannel 2; some resources with non-consecutive numbers may be used but cannot be directly indicated, such as subchannel 0 and subchannel 2.

Therefore, no matter which numbering option is adopted, when a legacy FRIV indication manner is used for indicating the physical sidelink shared channel frequency domain resources, the insufficient utilization of resources arises.

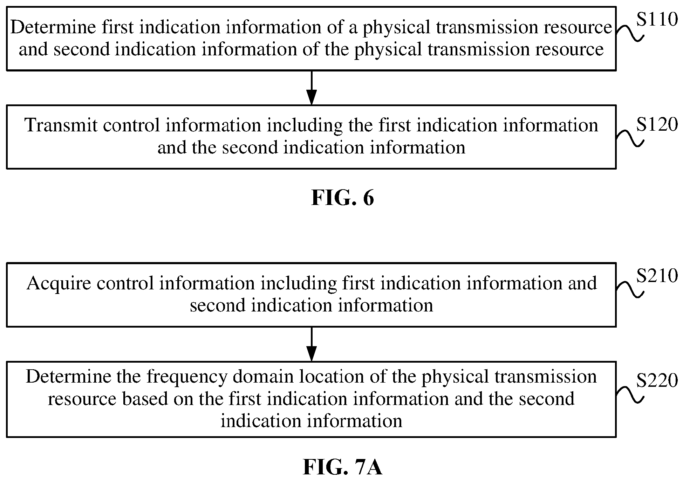

To address the preceding technical problem, in an exemplary embodiment, FIG. 6 is a flowchart of a resource indication method according to an embodiment of the present application. The method may be applied to the case of performing a resource indication and performed by a resource indication apparatus. The apparatus may be implemented by software and/or hardware and integrated on a first node. The first node covers any suitable type of base station or terminal device. The terminal device as the first node can be considered as a terminal device at a transmitting end, that is, the transmitting UE.

As shown in FIG. 6, the resource indication method provided in the present application includes S110 and S120.

In S110, first indication information of a physical transmission resource and second indication information of the physical transmission resource are determined.

The first indication information includes subchannel information of the physical transmission resource in a frequency domain. The second indication information includes other frequency domain indication information of the physical transmission resource other than the first indication information in the frequency domain. The other frequency domain indication information may be considered as other information configured to determine the frequency domain resource location of the physical transmission resource other than the subchannel information indicated by the first indication information. Content included in the other frequency domain indication information is not limited herein, as long as the frequency domain location of the physical transmission resource can be determined in combination with the first indication information. The frequency domain resource location may be the location of a resource block of the physical transmission resource in the frequency domain.

When the first node indicates the frequency domain location of the physical transmission resource to a second node, the first indication information and the second indication information that are included in control information may be used for a joint indication.

The control information may be DCI or SCI.

The first indication information may include the subchannel information of the physical transmission resource in the frequency domain. The subchannel information may be considered as information representing the location of a subchannel. For example, the subchannel information includes a subchannel index and the number of subchannels. The subchannel index may include the subchannel index of a first subchannel, which is configured to represent the starting subchannel location of the physical transmission resource. The number of subchannels may represent the number of subchannels forming the physical transmission resource. The second indication information may be information that assists the first indication information in indicating the physical transmission resource. The first indication information and the second indication information may jointly indicate the frequency domain resource location of the physical transmission resource. The first indication information may use a subchannel index-based FRIV indication. When the subchannel index-based FRIV indication is performed in the present application, indicated subchannels may be consecutive or not completely consecutive.

In the present application, one or more physical transmission resources may be provided.

When one physical transmission resource is provided, the first indication information and the second indication information may indicate the frequency domain resource location of the physical transmission resource.

When multiple physical transmission resources are provided, the first indication information and the second indication information may indicate the frequency domain resource location of each physical transmission resource.

When the transmitting UE indicates the receiving UE, that is, the first node is the transmitting UE, and the second node is the receiving UE, if the multiple physical transmission resources are provided, and the frequency domain resource locations of the multiple physical transmission resources are the same, the first indication information may indicate the number of subchannels of the physical transmission resources once. The number of subchannels of the physical transmission resources indicated once is used as the number of subchannels of all the physical transmission resources. The second node determines the number of subchannels of all the physical transmission resources upon receiving the number of subchannels of the physical transmission resources indicated once by the first node.

The second indication information may indicate other frequency domain information of the physical transmission resources once. The other frequency domain information of the physical transmission resources indicated once is used as other frequency domain information of all the physical transmission resources. The second node may determine the other frequency domain information of all the physical transmission resources upon receiving the other frequency domain information of the physical transmission resources indicated once by the second indication information.

When the base station indicates a UE, that is, when the first node is the base station, and the second node is the UE, if the multiple physical transmission resources are provided, and the frequency domain resource locations of the multiple physical transmission resources are the same, the first indication information and the second indication information may indicate the number of subchannels of the physical transmission resources once and the subchannel index of the first subchannel of the physical transmission resources once. The subchannel index of the first subchannel of the physical transmission resources indicated is used as the subchannel index of the first subchannel of all the physical transmission resources. The number of subchannels of the physical transmission resources indicated is used as the number of subchannels of all the physical transmission resources.

In an embodiment, the first indication information indicates the starting subchannel location (such as the subchannel index of the first subchannel) of the physical transmission resource reserved by the first node in the frequency domain and the number of subchannels of the physical transmission resource reserved by the first node in the frequency domain. The second indication information indicates a subchannel resource mapping manner and a subchannel index numbering manner. The first node may support multiple subchannel resource mapping manners and multiple subchannel index numbering manners. The second indication information may indicate one or more of the multiple subchannel resource mapping manners and one or more of the multiple subchannel index numbering manners. The subchannel resource mapping manners and the subchannel index numbering manners that are supported by the first node may be configured by a system network side, or preconfigured, or predefined by the system. In this embodiment, the first indication information indicates the starting location of the first subchannel of the physical transmission resource and the number of subchannels of the physical transmission resource. The second indication information indicates the subchannel resource mapping manner and the subchannel index numbering manner.

In the present application, the second indication information may perform an indication in a manner of a bit quantization indication or a bitmap. The number of bits may be determined based on a corresponding manner. For example, if the first node supports two resource mapping manners and index numbering manners, 1bit is used in the control information for indication. When the indication is 0, a subchannel resource mapping and index numbering manner is used, and when the indication is 1, the other subchannel resource mapping and index numbering manner is used.

In an embodiment, the first indication information indicates the starting subchannel location (such as the subchannel index of the first subchannel) of the physical transmission resource reserved by the first node in the frequency domain and the number of subchannels of the physical transmission resource reserved by the first node in the frequency domain. The second indication information indicates the shapes of L subchannels forming the physical transmission resource or the subchannel index consecutive state (such as index consecutive state information) of the L subchannels forming the physical transmission resource. The index consecutive state information includes the subchannel index consecutive state or the subchannel index non-consecutive state.

The index consecutive state information may be information indicating whether subchannel indexes are consecutive. The subchannel index consecutive state indicates that the subchannel indexes are consecutive. The subchannel index non-consecutive state indicates that the subchannel indexes are non-consecutive. When the second indication information indicates different subchannel index consecutive states, corresponding different subchannel index numbers may be provided, thereby corresponding to different physical resource blocks.

The shape of a subchannel may be considered as the shape formed by the indicated subchannel in the resource pool, and different shapes correspond to different subchannel index numbers, further corresponding to different physical resource blocks.

In an embodiment, the first indication information indicates the starting subchannel location (such as the subchannel index of the first subchannel) of the multiple physical transmission resources reserved by the first node in the frequency domain and the number of subchannels of the multiple physical transmission resources reserved by the first node in the frequency domain. The second indication information indicates the shape of each physical transmission resource, or the state of each physical transmission resource (such as the index consecutive state information), or a resource mapping and index numbering manner (that is, a resource mapping manner and an index numbering manner) that forms each physical transmission resource. The second indication information can flexibly indicate the frequency domain resource location of the physical transmission resource on the basis of the first indication information by indicating one of the preceding. The frequency domain resource location of the physical transmission resource can be determined by combining the information indicated by the first indication information with the content indicated by the second indication information, and the same first indication information combined with different second indication information can determine different frequency domain resource locations of the physical transmission resource.

In an embodiment, the physical transmission resource may be a PSSCH.

In the present application, a frequency domain resource indication includes two parts. The first part is a subchannel index-based FRIV frequency domain resource indication that indicates the starting subchannel location of the PSSCH and the number of subchannels occupied by the PSSCH. The second part is a subchannel resource mapping manner and index numbering manner indication. When the second part performs an indication, it may be based on a resource mapping manner and index numbering manner indication configured, preconfigured, or predefined by the system. The second part performs an indication in the manner of the bit quantization indication or the bitmap indication.

In the present application, the first part may be considered as a part corresponding to the first indication information. The second part may be considered as a part corresponding to the second indication information.

**In** the preceding example, the second part may also be an indication of the shapes of the L subchannels forming the PSSCH.

**In** this embodiment, in the case where a subchannel index is associated with an interlace and a resource block set, the first indication information may be the starting subchannel index of an FRIV indication-based physical transmission resource and the number of subchannels of the FRIV indication-based physical transmission resource. The second indication information may be the shape of the physical transmission resource, the state (such as the index consecutive state information) of the physical transmission resource, or the resource mapping and index numbering manner forming the physical transmission resource.

**In** an embodiment, in the case where a subchannel index is associated with an interlace index, the first indication information may be the starting subchannel index of the FRIV indication-based physical transmission resource and the number of subchannels of the FRIV indication-based physical transmission resource. The second indication information may be the number of resource block sets and resource block set indexes of the resource block sets. The resource block set indexes may be configured to indicate the resource block sets.

**In** an embodiment, in the case where a subchannel index is associated with a resource block set index, the first indication information may be the starting subchannel index of the FRIV indication-based physical transmission resource and the number of subchannels of the FRIV indication-based physical transmission resource. The second indication information may be the number of interlaces and interlace indexes of the interlaces. The interlace indexes may indicate the interlaces.

In S120, control information including the first indication information and the second indication information is transmitted.

After the first indication information and the second indication information are determined, the control information including the first indication information and the second indication information may be transmitted in S12. For example, the control information is transmitted to the second node so that the second node can determine the frequency domain location of the physical transmission resource.

In the resource indication method provided in the present application, the frequency domain resource location of the physical transmission resource can be flexibly indicated through the first indication information and the second indication information that are included in the control information, solving the technical problem that the resources cannot be fully utilized in the related frequency domain resource indication manner.

Based on the preceding embodiments, variant embodiments of the preceding embodiments are provided. For the brevity of description, only differences from the preceding embodiments are described in the variant embodiments.

In an embodiment, a subchannel is physical resource blocks on K1 interlaces in all the resource block sets within a communication resource pool, and the entire communication resource pool includes N1 subchannels with consecutive indexes in total; or a subchannel is physical resource blocks on K2 interlaces in one resource block set within a communication resource pool, and the entire communication resource pool includes N2 subchannels with consecutive indexes in total; or a subchannel is physical resource blocks in K3 resource block sets on one interlace within a communication resource pool, and the entire communication resource pool includes N3 subchannels with consecutive indexes in total; or a subchannel is physical resource blocks in K4 resource block sets within a communication resource pool, and the entire communication resource pool includes N4 subchannels with consecutive indexes in total, where K1, K2, K3, K4, N1, N2, N3, and N4 are all positive integers.

The subchannel is the physical resource blocks on the K1 interlaces in all the resource block sets within the communication resource pool, and the entire communication resource pool includes the N1 subchannels with consecutive indexes in total, which may be considered as subchannels associated with interlaces. Different interlace indexes correspond to different subchannels. The subchannel is the physical resource blocks in the K4 resource block sets within the communication resource pool, and the entire communication resource pool includes the N4 subchannels with consecutive indexes in total, which may be considered as subchannels associated with resource block sets. Different resource block set indexes correspond to different subchannels.

The subchannel is the physical resource blocks on the K2 interlaces in the one resource block set within the communication resource pool, and the entire communication resource pool includes the N2 subchannels with consecutive indexes in total; the subchannel is the physical resource blocks in the K3 resource block sets on the one interlace within the communication resource pool, and the entire communication resource pool includes the N3 subchannels with consecutive indexes in total, which may be considered as subchannels associated with interlaces and resource block sets. Different interlaces and resource block sets determine the associated subchannels.

In an embodiment, one or more physical transmission resources are provided.

In an embodiment, the first indication information indicates subchannel information of a frequency domain of one physical transmission resource; or the first indication information indicates subchannel information of frequency domains of multiple physical transmission resources; or the second indication information indicates other frequency domain indication information of one physical transmission resource in the frequency domain; or the second indication information indicates other frequency domain indication information of each physical transmission resource among multiple physical transmission resources in the frequency domain; or the second indication information indicates other frequency domain indication information of a target physical transmission resource in the frequency domain, and other frequency domain indication information of multiple physical transmission resources is the same as the other frequency domain indication information of the target physical transmission resource in the frequency domain.

The target physical transmission resource may be any physical transmission resource among the physical transmission resources or may be a first physical transmission resource among the physical transmission resources. The other frequency domain indication information of all the physical transmission resources may be acquired by indicating the other frequency domain indication information of the target physical transmission resource. The second node may use the frequency domain indication information as the other frequency domain indication information of all the physical transmission resources upon acquiring the other frequency domain indication information of the target physical transmission resource.

The number of physical transmission resources may be determined based on the number of subchannel indexes indicated by the first indication information. In the case where the first node is the base station, the number of physical transmission resources may be the number of indicated subchannel indexes. In the case where the first node is the UE, the number of physical transmission resources may be the number of indicated subchannel indexes.

In the case where the frequency domain resource locations of the multiple physical transmission resources are the same, the second indication information may only indicate the other frequency domain indication information of the target physical transmission resource. The first indication information may only indicate the number of subchannels of the target physical transmission resource among the multiple physical transmission resources or only indicate the number of subchannels of the target physical transmission resource among the multiple physical transmission resources and the subchannel index of the first subchannel of the target physical transmission resource.

In an embodiment, the first indication information indicates multiple PSSCHs, and the multiple PSSCHs include different numbers of subchannels.

In an embodiment, if the frequency domain resource locations of the multiple PSSCHs are the same, the indication information for N PSSCHs in the first indication information is only required to indicate the number of PSSCH subchannels once, so as to correspond to SCI of the transmitting UE and the receiving UE.

In an embodiment, if the frequency domain resource locations of the multiple PSSCHs are the same, the indication information for N PSSCHs in the first indication information is only required to indicate the first subchannel index of the N PSSCHs once and the number of PSSCH subchannels once, so as to correspond to SCI of the base station and the UE. The second indication information may indicate other frequency domain indication information of one or more PSSCHs.

In an embodiment, the second indication information of the multiple PSSCHs is the same, and the second indication information representing that all the PSSCHs are the same is only required to be indicated once; or the multiple PSSCHs are different, and all the N PSSCHs are required to be indicated by the second indication information.

In an embodiment, one of the following supported by the communication resource pool is configured by the system network side, is preconfigured, or is predefined by the system: one or more resource mapping manners for subchannels of the communication resource pool and an index numbering manner corresponding to each resource mapping manner; one or more resource mapping manners for L subchannels forming the physical transmission resource and an index numbering manner corresponding to each resource mapping manner; index consecutive state information of L subchannels forming the physical transmission resource, where the index consecutive state information includes the subchannel index consecutive state or the subchannel index non-consecutive state, and a subchannel index arrangement manner corresponding to each index consecutive state information; or one or more shapes of L subchannels forming the physical transmission resource and a subchannel index arrangement manner corresponding to each shape.

The system may be considered as a wireless communication system that may include all the nodes participating in the communication. A resource mapping manner may include a mapping manner for subchannels in a resource pool formed by interlaces and resource block sets. The resource mapping manner may include mapping the interlaces first and then mapping the resource block sets; mapping the resource block sets first and then mapping the interlaces; or mapping a resource block set group first, then mapping interlaces, and then traversing all the interlaces in all the resource block set groups. The resource block set group may be considered as a combination formed by one or more resource block sets.

In an example, for resource block sets configured on one carrier of one cell, each resource block set includes multiple interlaces. During the resource mapping, all the resource block sets may be traversed first, and then the interlaces may be traversed. Alternatively, an interlace group may be traversed first, then all the resource block sets in the interlace group may be traversed, and then resource block sets in all the interlace groups may be traversed. The interlace group may be considered as a combination formed by one or more interlaces.

The index numbering manner may be considered as a numbering manner for subchannel indexes in the communication resource pool. The resource mapping manner is associated with the index numbering manner. After the resource mapping manner is determined, the subchannels may be indexed and numbered based on a mapping sequence.

The physical transmission resource may be formed by the L subchannels. When the multiple physical transmission resources are provided, the number of subchannels included in each physical transmission resource is the same.

The index consecutive state information of the L subchannels forming the physical transmission resource may be configured by the system network side, may be preconfigured, or may be predefined by the system.

Each of the preceding content supported by the communication resource pool configured by the system network side, preconfigured, or predefined by the system may include one or more forms. For example, the configured consecutive state information may be the subchannel index consecutive state or the subchannel index non-consecutive state.

For any of the preceding supported by the communication resource pool, such as the resource mapping method, the configuration by the system network side, the preconfiguration, or the predefinition by the system includes which resource mapping manner is used for the subchannels in the communication resource pool, whether one or more resource mapping manners are supported, and how the multiple resource mapping manners are mapped; using the shape for an example, the configuration by the system network side, the preconfiguration, or the predefinition by the system includes supporting the shape of a PSSCH, how many shapes are supported, and what a subchannel index is under each shape.

The shape may be considered as the shape presented by the L subchannels in the communication resource pool. Different shapes may correspond to different subchannel index arrangement manners, thus corresponding to different physical transmission resources. The subchannel index arrangement manner may be considered as an arrangement manner for the subchannel indexes in the communication resource pool.

In an embodiment, the second indication information indicates one or more of the following: a resource mapping manner corresponding to subchannels forming the physical transmission resource; an index numbering manner corresponding to subchannels forming the physical transmission resource; the index consecutive state information corresponding to indexes of the L subchannels forming the physical transmission resource, where the index consecutive state information includes the subchannel index consecutive state or the subchannel index non-consecutive state; the one or more shapes corresponding to the L subchannels forming the physical transmission resource; the number of resource block sets occupied by the L subchannels forming the physical transmission resource; indexes of resource block sets occupied by the L subchannels forming the physical transmission resource; the number of interlaces occupied by the L subchannels forming the physical transmission resource; or indexes of interlaces occupied by the L subchannels forming the physical transmission resource.

The second indication information may perform the indication based on content configured by the system network side, preconfigured, or predefined by the system. For example, a resource mapping manner is selected for indication.

After the first indication information indicates the subchannel information, the frequency domain location of the physical transmission resource can be determined in combination with the second indication information. The number of resource block sets occupied by the L subchannels forming the physical transmission resource may be considered as the number of resource block sets occupied by the L subchannels forming the physical transmission resource in the communication resource pool.

The indexes of the resource block sets occupied by the L subchannels forming the physical transmission resource may be considered as indexes of resource block sets occupied by the L subchannels forming the physical transmission resource in the communication resource pool.

The number of interlaces occupied by the L subchannels forming the physical transmission resource may be considered as the number of interlaces occupied by the L subchannels forming the physical transmission resource in the communication resource pool.

The indexes of the interlaces occupied by the L subchannels forming the physical transmission resource may be considered as indexes of interlaces occupied by the L subchannels forming the physical transmission resource in the communication resource pool.

In an embodiment, the second indication information performs the indication in the manner of the bit quantization indication or the bitmap.

Bit quantization may be to indicate different contents by using different bit values. For example, 0 and 1 indicate different contents respectively.

The bitmap may be considered as mapping bits and content to be indicated, so as to indicate the content to be indicated through the mapping relationship.

In an embodiment, the first indication information indicates one of the following: the number of subchannels of a target physical transmission resource, the number of subchannels of each physical transmission resource among physical transmission resources other than the target physical transmission resource, and the subchannel index of the first subchannel of each physical transmission resource among the physical transmission resources other than the target physical transmission resource; the subchannel index of the first subchannel of all the physical transmission resources and the number of subchannels of all the physical transmission resources; the number of subchannels of a target physical transmission resource and the subchannel index of the first subchannel of each physical transmission resource among physical transmission resources other than the target physical transmission resource; the subchannel index of the first subchannel of a target physical transmission resource, the number of subchannels of the target physical transmission resource, and the subchannel index of the first subchannel of each physical transmission resource among physical transmission resources other than the target physical transmission resource; the number of subchannels of a target physical transmission resource; or the subchannel index of the first subchannel of a target physical transmission resource and the number of subchannels of the target physical transmission resource.

In an embodiment, if the frequency domain resource locations of the multiple PSSCHs are the same, the indication information for N PSSCHs in the first indication information is only required to indicate the number of PSSCH subchannels once, that is, the first indication information may indicate the number of subchannels of the target physical transmission resource. The target physical transmission resource may be any one or the first of the multiple physical transmission resources. This embodiment may correspond to the case where the first node is the transmitting UE, and the second node is the receiving UE.

In an embodiment, if the frequency domain resource locations of the multiple PSSCHs are the same, the indication information for N PSSCHs in the first indication information is only required to indicate the first subchannel index of the N PSSCHs once and the number of PSSCH subchannels once, that is, the first indication information may indicate the subchannel index of the first subchannel of the target physical transmission resource and the number of subchannels of the target physical transmission resource. This embodiment may correspond to the case where the first node is the base station, and the second node is the UE.

In the case where the subchannel is the physical resource blocks on the K1 interlaces in all the resource block sets within the communication resource pool, and the entire communication resource pool includes the N1 subchannels with consecutive indexes in total; or the subchannel is the physical resource blocks in the K4 resource block sets within the communication resource pool, and the entire communication resource pool includes the N4 subchannels with consecutive indexes in total, the first indication information may indicate one or more of the following: the number of subchannels of the target physical transmission resource, the number of subchannels of each physical transmission resource among the physical transmission resources other than the target physical transmission resource, and the subchannel index of the first subchannel of each physical transmission resource among the physical transmission resources other than the target physical transmission resource, which may correspond to the case where the first node is the transmitting UE, and the second node is the receiving UE; the subchannel index of the first subchannel of all the physical transmission resources and the number of subchannels of all the physical transmission resources, which may correspond to the case where the first node is the base station, and the second node is the UE; the number of subchannels of the target physical transmission resource and the subchannel index of the first subchannel of each physical transmission resource among the physical transmission resources other than the target physical transmission resource, which may correspond to the case where the first node is the transmitting UE, and the second node is the receiving UE; or the subchannel index of the first subchannel of the target physical transmission resource, the number of subchannels of the target physical transmission resource, and the subchannel index of the first subchannel of each physical transmission resource among physical transmission resources other than the target physical transmission resource, which may correspond to the case where the first node is the base station, and the second node is the UE.

In the case where the subchannel is the physical resource blocks on the K1 interlaces in all the resource block sets within the communication resource pool, and the entire communication resource pool includes the N1 subchannels with consecutive indexes in total; or the subchannel is the physical resource blocks on the K2 interlaces in the one resource block set within the communication resource pool, and the entire communication resource pool includes the N2 subchannels with consecutive indexes in total; or the subchannel is the physical resource blocks in the K3 resource block sets on the one interlace within the communication resource pool, and the entire communication resource pool includes the N3 subchannels with consecutive indexes in total; or the subchannel is the physical resource blocks in the K4 resource block sets within the communication resource pool, and the entire communication resource pool includes the N4 subchannels with consecutive indexes in total, the first indication information may indicate:

the number of subchannels of the target physical transmission resource; or the subchannel index of the first subchannel of the target physical transmission resource and the number of subchannels of the target physical transmission resource.

In an embodiment, the second indication information indicates one of the following: the number of resource block sets of a target physical transmission resource, the number of resource block sets of each physical transmission resource among physical transmission resources other than the target physical transmission resource, and a resource block set index of a first resource block set of each physical transmission resource among the physical transmission resources other than the target physical transmission resource; a resource block set index of a first resource block set of all the physical transmission resources and the number of resource block sets of a target physical transmission resource; the number of resource block sets of a target physical transmission resource and a resource block set index of a first resource block set of each physical transmission resource among physical transmission resources other than the target physical transmission resource; a resource block set index of a first resource block set of a target physical transmission resource, the number of resource block sets of the target physical transmission resource, and a resource block set index of a first resource block set of each physical transmission resource among physical transmission resources other than the target physical transmission resource; the number of resource block sets of a target physical transmission resource and a resource block set index of a first resource block set of the target physical transmission resource; or the number of resource block sets of a target physical transmission resource.

In the case where the subchannel is the physical resource blocks on the K1 interlaces in all the resource block sets within the communication resource pool, and the entire communication resource pool includes the N1 subchannels with consecutive indexes in total; the first node is the base station, and the second node is the UE, the second indication information may indicate the resource block set index of the first resource block set of all the physical transmission resources and the number of resource block sets of the target physical transmission resource. The second indication information may also indicate the resource block set index of the first resource block set of the target physical transmission resource, the number of resource block sets of the target physical transmission resource, and the resource block set index of the first resource block set of each physical transmission resource among the physical transmission resources other than the target physical transmission resource.

In the case where the subchannel is the physical resource blocks on the K1 interlaces in all the resource block sets within the communication resource pool, and the entire communication resource pool includes the N1 subchannels with consecutive indexes in total; the first node is the transmitting UE, and the second node is the receiving UE, the second indication information may indicate the number of resource block sets of the target physical transmission resource, the number of resource block sets of each physical transmission resource among the physical transmission resources other than the target physical transmission resource, and the resource block set index of the first resource block set of each physical transmission resource among the physical transmission resources other than the target physical transmission resource. The second indication information may also indicate the number of resource block sets of the target physical transmission resource and the resource block set index of the first resource block set of each physical transmission resource among the physical transmission resources other than the target physical transmission resource.

In the case where the frequency domain resource locations of the multiple physical transmission resources are the same, when the first node is the base station, and the second node is the UE, the second indication information may indicate the number of resource block sets of the target physical transmission resource and the resource block set index of the first resource block set of the target physical transmission resource.

In the case where the frequency domain resource locations of the multiple physical transmission resources are the same, when the first node is the transmitting UE, and the second node is the receiving UE, the second indication information may indicate the number of resource block sets of the target physical transmission resource.

In an embodiment, the control information includes downlink control information or sidelink control information.

In the case where the first node is the base station, and the second node is the UE, the control information may be the downlink control information.

In the case where the first node is the transmitting UE, and the second node is the receiving UE, the control information may be the sidelink control information.

In an embodiment, the subchannel information includes one or more of the following: a subchannel index or the number of subchannels.

The subchannel index may indicate the starting subchannel location of the physical transmission resource. The number of subchannels may indicate the number of subchannels forming the physical transmission resource.

In an exemplary embodiment, the present application further provides a resource indication method. FIG. 7A is another flowchart of a resource indication method according to an embodiment of the present application. The method may be applied to the case of determining a physical transmission resource and performed by a resource indication apparatus provided in the present application. The apparatus may be integrated on the second node. For the content that is not yet exhaustive in this embodiment, reference may be made to the preceding embodiment. Details are not repeated herein. The second node may be the receiving UE such as a UE communicating with the base station, or a UE communicating with the UE and being performed with a resource indication.

As shown in FIG. 7A, the resource indication method provided in the embodiment of the present application includes S210 and S220.

In S210, control information including first indication information and second indication information is acquired.

The first indication information includes subchannel information of a frequency domain of a physical transmission resource. The second indication information includes other frequency domain indication information of the physical transmission resource other than the first indication information in the frequency domain.

In S220, the frequency domain location of the physical transmission resource is determined based on the first indication information and the second indication information.

After being acquired, the first indication information and the second indication information may be parsed to determine the frequency domain location of the physical transmission resource.

In this embodiment, the frequency domain location of the physical transmission resource indicated by a first node is determined based on the first indication information and the second indication information that are received. The frequency domain location of the physical transmission resource can be flexibly indicated through the joint indication of the first indication information and the second indication information.

Based on the preceding embodiment, variant embodiments of the preceding embodiments are provided. For the brevity of description, only differences from the preceding embodiments are described in the variant embodiments.

In an embodiment, a subchannel is physical resource blocks on K1 interlaces in all the resource block sets within a communication resource pool, and the entire communication resource pool includes N1 subchannels with consecutive indexes in total; or a subchannel is physical resource blocks on K2 interlaces in one resource block set within a communication resource pool, and the entire communication resource pool includes N2 subchannels with consecutive indexes in total; or a subchannel is physical resource blocks in K3 resource block sets on one interlace within a communication resource pool, and the entire communication resource pool includes N3 subchannels with consecutive indexes in total; or a subchannel is physical resource blocks in K4 resource block sets within a communication resource pool, and the entire communication resource pool includes N4 subchannels with consecutive indexes in total, where K1, K2, K3, K4, N1, N2, N3, and N4 are all positive integers.

In an embodiment, one or more physical transmission resources are provided.

In an embodiment, the first indication information indicates subchannel information of frequency domains of the one or more physical transmission resources; or the first indication information indicates subchannel information of frequency domains of multiple physical transmission resources; or the second indication information indicates other frequency domain indication information of frequency domains of the one or more physical transmission resources; or the second indication information indicates other frequency domain indication information of each physical transmission resource among multiple physical transmission resources in the frequency domain; or the second indication information indicates other frequency domain indication information of a target physical transmission resource in the frequency domain, and other frequency domain indication information of multiple physical transmission resources is the same as the other frequency domain indication information of the target physical transmission resource in the frequency domain.

In an embodiment, one of the following supported by the communication resource pool is configured by a system network side, is preconfigured, or is predefined by the system:
one or more resource mapping manners for subchannels of the communication resource pool and an index numbering manner corresponding to each resource mapping manner; one or more resource mapping manners for L subchannels forming the physical transmission resource and an index numbering manner corresponding to each resource mapping manner; index consecutive state information of L subchannels forming the physical transmission resource, where the index consecutive state information includes the subchannel index consecutive state or the subchannel index non-consecutive state, and a subchannel index arrangement manner corresponding to each index consecutive state information; or one or more shapes of L subchannels forming the physical transmission resource and a subchannel index arrangement manner corresponding to each shape.

In an embodiment, the second indication information indicates one or more of the following: a resource mapping manner corresponding to subchannels forming the physical transmission resource; an index numbering manner corresponding to subchannels forming the physical transmission resource; the index consecutive state information corresponding to indexes of the L subchannels forming the physical transmission resource, where the index consecutive state information includes the subchannel index consecutive state or the subchannel index non-consecutive state; the one or more shapes corresponding to the L subchannels forming the physical transmission resource; the number of resource block sets occupied by the L subchannels forming the physical transmission resource; indexes of resource block sets occupied by the L subchannels forming the physical transmission resource; the number of interlaces occupied by the L subchannels forming the physical transmission resource; or indexes of interlaces occupied by the L subchannels forming the physical transmission resource.

In an embodiment, the second indication information performs an indication in a manner of a bit quantization indication or a bitmap.

In an embodiment, the first indication information indicates one of the following: the number of subchannels of a target physical transmission resource, the number of subchannels of each physical transmission resource among physical transmission resources other than the target physical transmission resource, and a subchannel index of a first subchannel of each physical transmission resource among the physical transmission resources other than the target physical transmission resource; a subchannel index of a first subchannel of all the physical transmission resources and the number of subchannels of all the physical transmission resources; the number of subchannels of a target physical transmission resource and a subchannel index of a first subchannel of each physical transmission resource among physical transmission resources other than the target physical transmission resource; a subchannel index of a first subchannel of a target physical transmission resource, the number of subchannels of the target physical transmission resource, and a subchannel index of a first subchannel of each physical transmission resource among physical transmission resources other than the target physical transmission resource; the number of subchannels of a target physical transmission resource; or a subchannel index of a first subchannel of a target physical transmission resource and the number of subchannels of the target physical transmission resource.

In an embodiment, the second indication information indicates one of the following: the number of resource block sets of a target physical transmission resource, the number of resource block sets of each physical transmission resource among physical transmission resources other than the target physical transmission resource, and a resource block set index of a first resource block set of each physical transmission resource among the physical transmission resources other than the target physical transmission resource; a resource block set index of a first resource block set of all the physical transmission resources and the number of resource block sets of a target physical transmission resource; the number of resource block sets of a target physical transmission resource and a resource block set index of a first resource block set of each physical transmission resource among physical transmission resources other than the target physical transmission resource; a resource block set index of a first resource block set of a target physical transmission resource, the number of resource block sets of the target physical transmission resource, and a resource block set index of a first resource block set of each physical transmission resource among physical transmission resources other than the target physical transmission resource; the number of resource block sets of a target physical transmission resource and a resource block set index of a first resource block set of the target physical transmission resource; or the number of resource block sets of a target physical transmission resource.

In an embodiment, the control information includes downlink control information or sidelink control information.

In an embodiment, the subchannel information includes one or more of the following: a subchannel index or the number of subchannels.

The present application is exemplarily described below.

The SL UE performs the communications based on the communication resource pool in an SL bandwidth part. It is assumed that the SL communication resource pool includes five RB sets, the subcarrier space on an SL carrier is 15 k, and ten interlaces are supported.

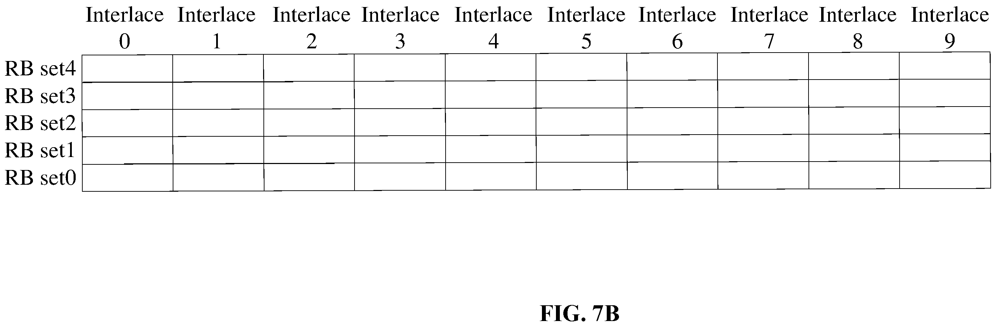

FIG. 7B is a schematic diagram of resources in a communication resource pool according to an embodiment of the present application. The resources included in the SL communication resource pool are shown in FIG. 7B.

The SL communication resource pool includes an integer number of subchannels. In the interlace-based transmission in the SL-U system, the mapping of the subchannels to physical resource blocks (PRB) is no longer the mapping of one subchannel to multiple consecutive PRBs. To meet the occupied channel bandwidth (OCB) requirement on a spectrum unlicensed, there are two main resource mapping manners from the subchannels to the PRBs.

In subchannel resource mapping and index numbering manner 1, the interlaced resource blocks index numbering is first used, and then the RB set index numbering is used. In subchannel resource mapping and index numbering manner 2, the RB set index numbering is first used, and then the interlaced resource blocks index numbering is used.

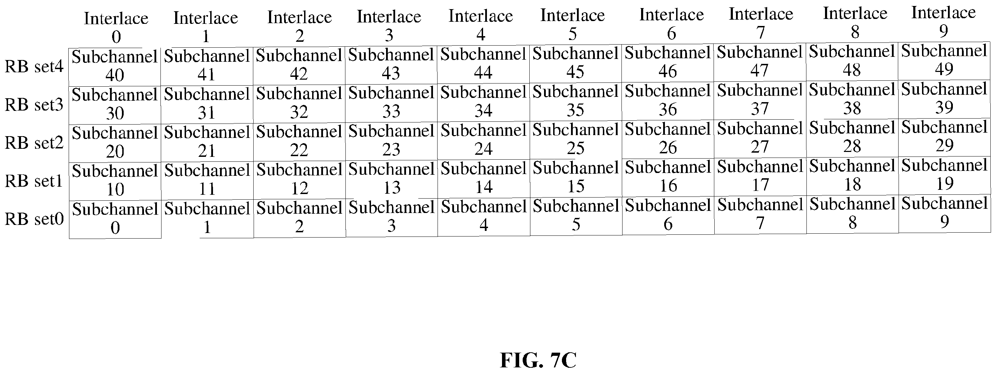

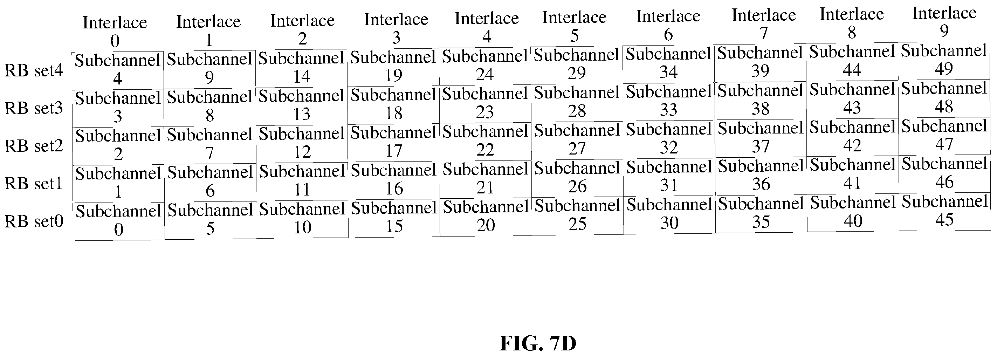

FIG. 7C is a schematic diagram of a subchannel numbering manner according to an embodiment of the present application, which corresponds to the case where the subchannel is the physical resource blocks on the K2 interlaces in the one resource block set within the communication resource pool, and the entire communication resource pool includes the N2 subchannels with consecutive indexes in total, where K2 is 1. FIG. 7D is another schematic diagram of a subchannel numbering manner according to an embodiment of the present application, which corresponds to the case where the subchannel is the physical resource blocks in the K3 resource block sets on the one interlace within the communication resource pool, and the entire communication resource pool includes the N3 subchannels with consecutive indexes in total, where K3 is 1. In an embodiment, five RB sets are configured on one carrier in one cell, each RB set includes ten interlaces, and subchannels are numbered according to manner 1; assuming that a subchannel is equal to one interlace within one RB set, and the numbered result is shown in FIG. 7C; the subchannels are determined and numbered according to manner 2, and the result is shown in FIG. 7D.

When the system supports the two subchannel resource mapping and subchannel index numbering manners, and after the UE determines the frequency domain location of a PSSCH resource, when the frequency domain resource location of the PSSCH is indicated to the receiving UE in the SCI, the indication can be performed in two parts.

The first part (that is, the first indication information) is a subchannel index-based FRIV indication.

The second part (that is, the second indication information) is a subchannel resource mapping or index numbering manner indication.

The subchannel index-based FRIV indication in the first part indicates the starting subchannel location S of the PSSCH resource reserved by the transmitting UE in the frequency domain and the number L of subchannels of the PSSCH resource reserved by the transmitting UE in the frequency domain. The second part indicates whether the subchannel resource mapping manner and the subchannel index numbering manner use FIG. 7C or FIG. 7D.

Other subchannel resource mapping manners and subchannel index numbering manners may also be configured. Similarly, an indication field in the second part indicates which configuration to use.

The system supports several configurations that are configured through high-level signaling, are preconfigured, or are predefined by the system (there are one or more resource mapping manners for communication resource pool subchannels supported by the communication resource pool, and an index numbering manner corresponding to each resource mapping manner is configured by the system network side, or is preconfigured, or is predefined by the system).

The indication information in the second part may perform an indication by quantifying according to the number of subchannel resource mapping manners supported in the resource pool or may perform an indication in a bitmap manner (that is, the second indication information performs the indication in the manner of the bit quantization indication or the bitmap.

In an example, the system supports the two subchannel resource mapping and index numbering manners, and 1bit is used in the control information for indication. When the indication is 0, the subchannel resource mapping manner and the index numbering manner in FIG. 7C are used. When the indication is 1, the subchannel resource mapping manner and the index numbering manner in FIG. 7D are used.

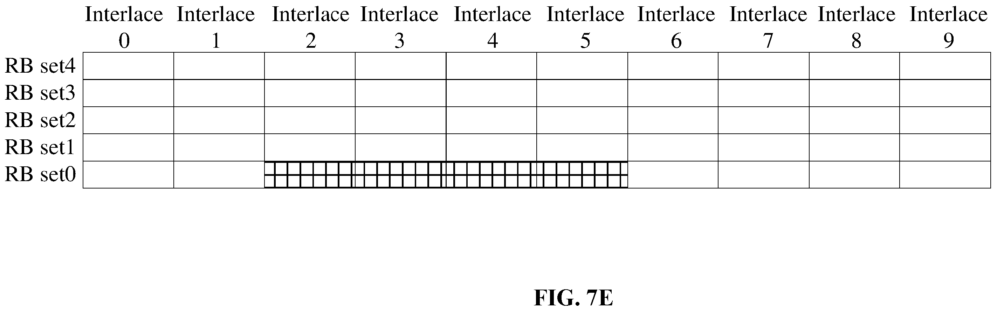

FIG. 7E is a schematic diagram of the location of a PSSCH resource according to an embodiment of the present application. When the transmitting UE determines that the PSSCH resource uses a resource shown in a filled region in FIG. 7E, the first part of frequency domain information of the PSSCH resource indicated to other UEs in the SCI is the subchannel index-based FRIV, and the second part is 0.

Referring to FIG. 7E, the subchannel index-based FRIV indicates that the starting subchannel of the PSSCH is subchannel 2, the length of the PSSCH is four subchannels, and the 0bit in the second part indicates that the four consecutive subchannels forming the PSSCH are mapped according to FIG. 7C.

On the PSCCH resource on subchannel 2, the receiving UE may determine the actual resource location of the PSSCH according to the two parts (that is, the first part and the second part) of frequency domain indication information.

In an example, the system supports the two subchannel resource mapping manners and index numbering manners, and 1bit is used in the control information for indication. When the indication is 0, the subchannel resource mapping and index numbering manner in FIG. 7C is used. When the indication is 1, the subchannel resource mapping and index numbering manner in FIG. 7D is used.

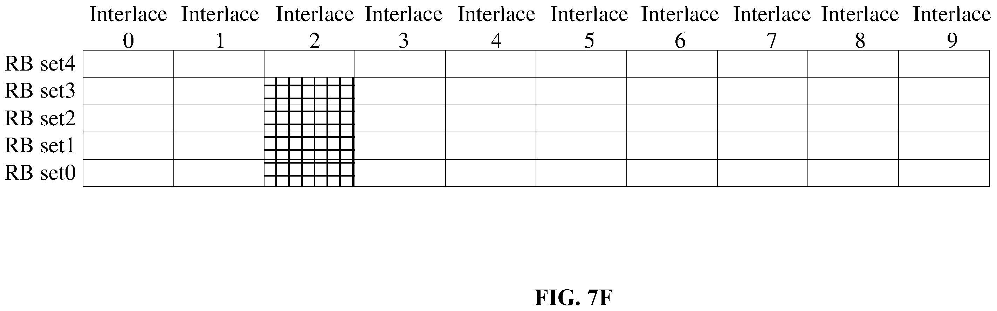

FIG. 7F is another schematic diagram of the location of a PSSCH resource according to an embodiment of the present application. When the transmitting UE determines that the PSSCH resource uses a resource shown in a filled region in FIG. 7F, the first part of the frequency domain information of the PSSCH resource indicated to the other UEs in the SCI is the subchannel index-based FRIV, and the second part is 1.

Referring to FIG. 7F, the subchannel index-based FRIV in the first part indicates that the starting subchannel of the PSSCH is subchannel 10, the length of the PSSCH is four subchannels, and the 1bit in the second part indicates that the four consecutive subchannels forming the PSSCH are mapped according to FIG. 7D.

On the PSCCH resource on subchannel 10, the receiving UE may determine the actual resource location of the PSSCH according to the two parts (that is, the first part and the second part) of frequency domain indication information.

In an example, the system supports the two subchannel resource mapping manners and index numbering manners, and 1bit is used in the control information for indication. When the indication is 0, the subchannel resource mapping and index numbering manner in FIG. 7C is used. When the indication is 1, the subchannel resource mapping and index numbering manner in FIG. 7D is used.

When the base station determines that an SL UE PSSCH resource uses a resource in FIG. 7E, the first part of the frequency domain information of the PSSCH resource indicated to the transmitting UE in the DCI is the subchannel index-based FRIV and the starting location information of the PSSCH, and the second part is 0. Upon receiving the two parts of frequency domain indication information in the DCI, the transmitting UE may determine that the frequency domain resource location corresponding to the PSSCH is as shown in FIG. 7E.

In an example, the system supports the two subchannel resource mapping manners and index numbering manners, and 1bit is used in the control information for indication. When the indication is 0, the subchannel resource mapping and index numbering manner in FIG. 7C is used. When the indication is 1, the subchannel resource mapping and index numbering manner in FIG. 7D is used.

When the base station determines that an SL UE PSSCH resource uses a resource in FIG. 7F, the first part of the frequency domain information of the PSSCH resource indicated to the transmitting UE in the DCI is the subchannel index-based FRIV, and the second part is 1. Upon receiving the two parts of frequency domain indication information in the DCI, the transmitting UE may determine that the frequency domain resource location corresponding to the PSSCH is as shown in FIG. 7F.

In an embodiment, the system is configured, preconfigured, or predefined to only support one subchannel resource mapping and index numbering manner, for example, only support that the interlaced resource blocks index numbering is first used, and then the RB set index numbering is used, so the resource numbering of the subchannels in the resource pool is shown in FIG. 7C.

When determining a PSSCH frequency domain resource formed by L subchannels in a frequency domain of a certain slot or several consecutive slots in the resource pool, the UE may determine the starting point as S and L consecutive subchannels by using the existing NR Rel-16/17 SL manner and may also determine the starting point as S and L incompletely consecutive subchannels by using the existing NR Rel-16/17 SL manner.

Whether the PSSCH determined by the base station in mode 1 is indicated to the transmitting UE, or the PSSCH resource determined by the transmitting UE in mode 2 is indicated to the receiving UE, the subchannel location is required to be clear, so there are also two parts in the indication information.

In the first part, the subchannel index-based FRIV indicates the subchannel starting point S of the PSSCH and the number L of subchannels of the PSSCH; the second part indicates the shapes of the L subchannels forming the PSSCH or the state of the L subchannels forming the PSSCH, where the state includes the subchannel index consecutive state or the subchannel index non-consecutive state; it is assumed that the subchannel starting point of the PSSCH is S, the number of subchannels is L, the resource pool includes M RB sets, and K subchannels are in one RB set.

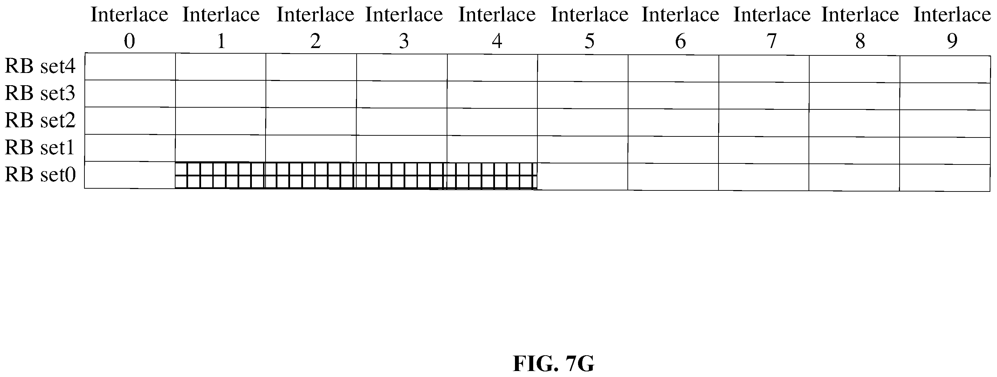

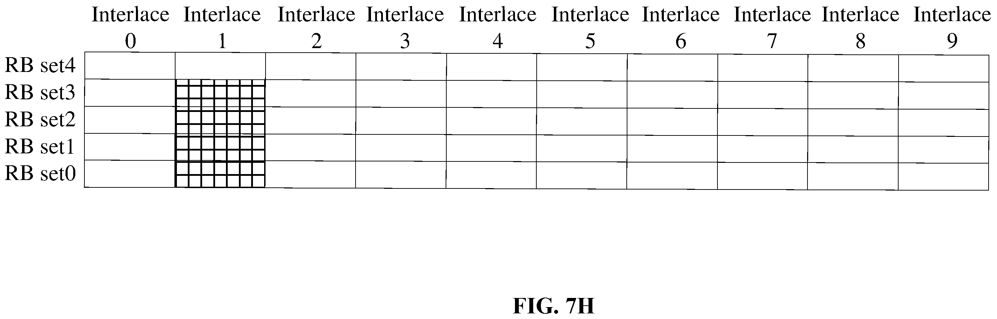

Shape 1 indicates L consecutive subchannels, such as S:1:(S + L - 1), that is, the starting subchannel index is S, the subchannel space is 1, and the ending subchannel index is (S + L - 1); if S is one, and L is four, shape 1 corresponds to FIG. 7G. Shape 2 indicates L subchannels of S:K:(S + K*(L - 1)), that is, the starting subchannel index is S, the subchannel space is K, and the ending subchannel index is (S + K*(L - 1)); if S is one, L is four, and K is ten, shape 2 corresponds to FIG. 7H. Shape 3 indicates that the PSSCH includes the shapes of X RB sets, with L/X subchannels in each RB set; in the first RB set: S:1:(S + L/X - 1); in the second RB set: (S + K):1:(S + K + L/X - 1); ... in the X-th RB set, (S + (X - 1)*K): 1:(S + (X - 1)*K + L/X - 1).

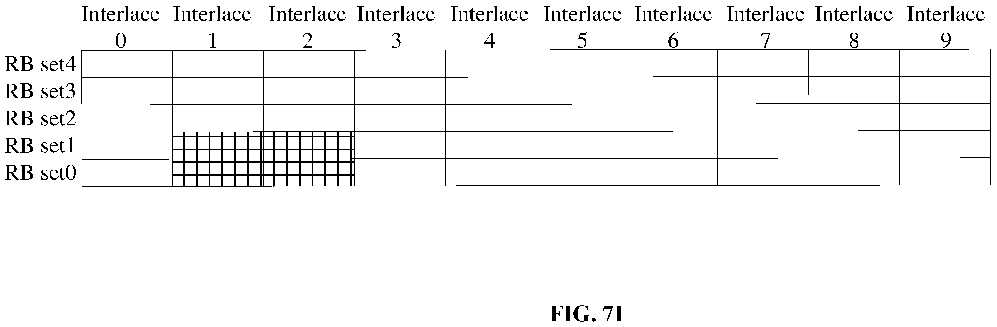

When X is equal to 2, shape 3 corresponds to FIG. 7I.

If L cannot divide X, the result can be rounded down. For example, L = 10, and X = 3, there are three subchannels in the first RB set, there are three subchannels in the second RB set, and there are four subchannels in the third RB set. X ≥ 1, and X ≤ the total number of RB sets in the communication resource pool.

Assuming that the resource pool supports that the second part includes K shapes, the second part may indicate the K shapes in the manner of bit quantization or a bitmap.

In an embodiment, the base station DCI indicates the PSSCH resource to the transmitting UE.

FIG. 7G is another schematic diagram of the location of a PSSCH resource according to an embodiment of the present application. FIG. 7H is another schematic diagram of the location of a PSSCH resource according to an embodiment of the present application. FIG. 7I is another schematic diagram of the location of a PSSCH resource according to an embodiment of the present application. The base station determines that the subchannel starting point of the PSSCH resource of the transmitting UE is 1, and the number of subchannels is four. The PSSCH of the resource pool has three optional shapes, and the current shape of the PSSCH is consecutive, as shown in FIG. 7G.

Therefore, frequency domain resources of the PSSCH are indicated in the DCI through the following two parts.

The first part is the subchannel index-based FRIV + a first subchannel index indication of a first PSSCH (a legacy manner, which is not repeated).

The second part is shape 1, the index consecutive shape, and 00 used for indication.

Finally, the subchannels of the PSSCH jointly indicated by the first part and the second part are subchannel1, subchannel2, subchannel3, and subchannel4.

Upon receiving the two parts of frequency domain indication information in the DCI, the transmitting UE may determine that the frequency domain resource location corresponding to the PSSCH is as shown in FIG. 7G.

As shown in FIG. 7I, when the shape of the PSSCH is shape 3, the frequency domain resources of the PSSCH are indicated in the DCI through the following two parts.

The first part is the subchannel index-based FRIV + a first PSSCH starting point (that is, the first subchannel index) indication (a legacy manner, which is not repeated).

The second part is shape 3, and 01 used for indication.

Finally, the subchannels of the PSSCH jointly indicated by the first part and the second part are subchannel1, subchannel2, subchannel 11, and subchannel12.

Upon receiving the two parts of frequency domain indication information in the DCI, the transmitting UE may determine that the frequency domain resource location corresponding to the PSSCH is as shown in FIG. 7I.

As shown in FIG. 7H, when the shape of the PSSCH is shape 2, the frequency domain resources of the PSSCH are indicated in the DCI through the following two parts.

The first part is the subchannel index-based FRIV (a legacy manner, which is not repeated).

The second part is shape 2, and 10 used for indication.

Finally, the subchannels of the PSSCH jointly indicated by the first part and the second part are subchannel1, subchannel11, subchannel21, and subchannel31.

Upon receiving the two parts of frequency domain indication information in the DCI, the transmitting UE may determine that the frequency domain resource location corresponding to the PSSCH is as shown in FIG. 7H.

In an example, the transmitting UE indicates PSSCH resources to the receiving UE through the SCI.

The starting point of the PSSCH resources determined by the transmitting UE is 1, the number of PSSCH resources determined by the transmitting UE is four, the PSSCH of the resource pool has three optional shapes, and the current shape of the PSSCH is consecutive, as shown in FIG. 7G.

Therefore, the frequency domain resources of the PSSCH are indicated in the SCI.

The first part is the subchannel index-based FRIV (a legacy manner, which is not repeated).

The second part is shape 1, the index consecutive shape, and 00 used for indication.

Finally, the subchannels of the PSSCH jointly indicated by the first part and the second part are subchannel 1, subchannel2, subchannel3, and subchannel4.

Upon receiving the two parts of frequency domain indication information in the SCI, the receiving UE may determine that the frequency domain resource location corresponding to the PSSCH is as shown in FIG. 7G.

As shown in FIG. 7I, when the shape of the PSSCH is shape 3, the frequency domain resources of the PSSCH are indicated in the SCI.

The first part is the subchannel index-based FRIV (a legacy manner, which is not repeated).

The second part is shape 3, and 01 used for indication.

Finally, the subchannels of the PSSCH jointly indicated by the first part and the second part are subchannel 1, subchannel2, subchannel 11, and subchannel 12.

Upon receiving the two parts of frequency domain indication information in the SCI, the receiving UE may determine that the frequency domain resource location corresponding to the PSSCH is as shown in FIG. 7I.

As shown in FIG. 7H, when the shape of the PSSCH is shape 2, the frequency domain resources of the PSSCH are indicated in the SCI.

The first part is the subchannel index-based FRIV (a legacy manner, which is not repeated).

The second part is shape 2 of the physical transmission resource, and 10 used for indication.

Finally, the subchannels of the PSSCH jointly indicated by the first part and the second part are subchannel1, subchannel11, subchannel21, and subchannel31.

Upon receiving the two parts of frequency domain indication information in the SCI, the receiving UE may determine that the frequency domain resource location corresponding to the PSSCH is as shown in FIG. 7H.

In an embodiment, DCI or SCI generally indicates resource locations of multiple PSSCHs, and therefore, frequency domain resources of the multiple PSSCHs are required to be indicated in the DCI or the SCI.

In the first part of a PSSCH frequency domain resource indication in the SCI, the subchannel index-based FRIV indicates the starting location Si of the frequency domain resources of the multiple PSSCHs and the length L of the frequency domain resources of the multiple PSSCHs. The second part indicates the shape of each PSSCH, or a subchannel resource mapping manner and an index numbering manner that form each PSSCH.

In an example, the system supports two subchannel resource mapping manners and index numbering manners, where bit 0 represents subchannel resource mapping and index numbering manner 1, and bit 1 represents subchannel resource mapping and index numbering manner 2.

When the SCI reserves three PSSCH resources, the first part of the PSSCH frequency domain indication in the SCI is that the subchannel index-based FRIV indicates the subchannel length (L = 4) of frequency domains of the three PSSCH resources, the starting subchannel location of a frequency domain of a second PSSCH resource, and the starting subchannel location of a frequency domain of a third PSSCH resource; the second part is 0 1 0.

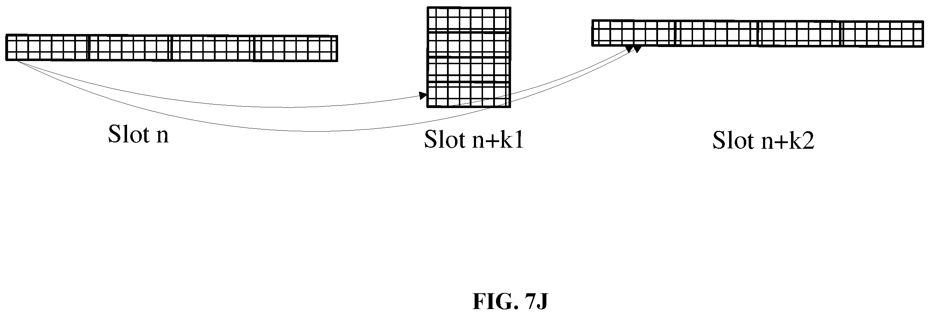

FIG. 7J is a schematic diagram of the frequency domain resource location of a PSSCH resource according to an embodiment of the present application. Upon receiving the two parts of frequency domain indication information in the SCI, the receiving UE may determine that the frequency domain resource locations corresponding to the PSSCHs are as shown in FIG. 7J.

In an example, the system supports two subchannel resource mapping and index numbering manners, where bit 0 represents subchannel resource mapping and index numbering manner 1, and bit 1 represents subchannel resource mapping and index numbering manner 2.

When determining the three PSSCH resources, the base station indicates the three PSSCH resources to the transmitting UE through the DCI. The first part of a PSSCH frequency domain indication in the DCI is that the subchannel index-based FRIV indicates the subchannel length (L = 4) of frequency domains of the three PSSCH resources and the starting subchannel location of a frequency domain of each PSSCH resource; the second part is 0 1 0.

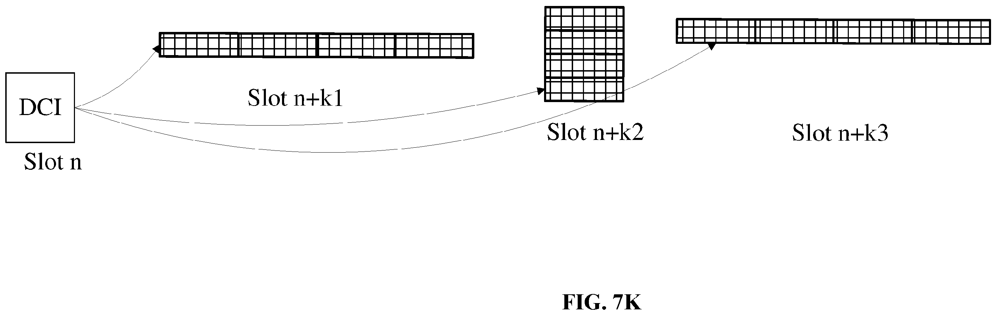

FIG. 7K is another schematic diagram of the frequency domain resource location of a PSSCH resource according to an embodiment of the present application. Upon receiving the two parts of frequency domain indication information in the DCI, the transmitting UE may determine that the frequency domain resource locations corresponding to the PSSCHs are as shown in FIG. 7K.

In an example, the system is configured, preconfigured, or predefined to only support the one subchannel resource mapping and index numbering manner, for example, only support that the interlaced resource blocks index numbering is first used, and then the RB set index numbering is used; the SL resource pool where the UE is located is configured, preconfigured, or predefined to support two PSSCH frequency domain resource subchannel shapes.

Bit 0 represents the consecutive subchannel index shape; bit 1 represents the incompletely consecutive subchannel index shape.

When the SCI reserves the three PSSCH resources, the first part of the PSSCH frequency domain indication in the SCI is that the subchannel index-based FRIV indicates the subchannel length (L = 4) of the frequency domains of the three PSSCH resources, the starting subchannel location of the second PSSCH resource in the frequency domain, and the starting subchannel location of the third PSSCH resource in the frequency domain; the second part is 0 1 0. The corresponding resources are shown in FIG. 7J.

Upon receiving the two parts of frequency domain indication information in the SCI, the receiving UE may determine that the frequency domain resource locations corresponding to the PSSCHs are as shown in FIG. 7J.

In an example, the system is configured, preconfigured, or predefined to only support the one subchannel resource mapping and index numbering manner, for example, only support that the interlaced resource blocks index numbering is first used, and then the RB set index numbering is used; the SL resource pool where the UE is located is configured, preconfigured, or predefined to support the two PSSCH frequency domain resource subchannel shapes.

Bit 0 represents the consecutive subchannel index shape; bit 1 represents the incompletely consecutive subchannel index shape.

When determining the three PSSCH resources, the base station indicates the three PSSCH resources to the transmitting UE through the DCI. The first part of the PSSCH frequency domain indication in the DCI is that the subchannel index-based FRIV indicates the subchannel length (L = 4) of the frequency domains of the three PSSCH resources and the starting subchannel location of each PSSCH resource in the frequency domain; the second part is 0 1 0. The resource locations are shown in FIG. 7K.

Upon receiving the two parts of frequency domain indication information in the DCI, the transmitting UE may determine that the frequency domain resource locations corresponding to the PSSCHs are as shown in FIG. 7K.

In an embodiment, the PSSCH frequency domain resource is indicated based on two parts of information; the first part is subchannel information of the PSSCH determined by an interlace, and the second part is RB set information of the PSSCH. The frequency domain resource indication in the SCI is divided into two parts X and Y X indicates the subchannel information of each PSSCH determined by the base station or reserved by the transmitting UE, and Y indicates the RB set information of each PSSCH determined by the base station or reserved by the transmitting UE. The corresponding subchannel is the physical resource blocks on the K1 interlaces in all the resource block sets within the communication resource pool, and the entire communication resource pool includes the N1 subchannels with consecutive indexes in total.

The transmitting UE determines the three PSSCHs that are denoted as PSSCH1, PSSCH2, and PSSCH3 respectively, so the SCI of the transmitting UE includes the first part and the second part that are shown in the following examples.

In an example, the first part X indicates the number M of consecutive subchannels of PSSCH1, the subchannel starting location S1' of PSSCH2 and the number M1 of consecutive subchannels of PSSCH2, and the subchannel starting location S2' of PSSCH3 and the number M2 of consecutive subchannels of PSSCH3; the second part Y indicates the number L of consecutive RB sets of PSSCH1, the RB set starting location S1 of PSSCH2 and the number L1 of consecutive RB sets of PSSCH2, and the RB set starting location S2 of PSSCH3 and the number L2 of consecutive RB sets of PSSCH3.

In an example, since the total resource amount of PSSCH transmission three times is the same, some indication overhead may be saved. For example, when the overhead of the first part is partially saved, the example is as follows: the first part X indicates the number M of consecutive subchannels of PSSCH1, the subchannel starting location S1' of PSSCH2, and the subchannel starting location S2' of PSSCH3; the second part Y indicates the number L of consecutive RB sets of PSSCH1, the RB set starting location S1 of PSSCH2 and the number L1 of consecutive RB sets of PSSCH2, and the RB set starting location S2 of PSSCH3 and the number L2 of consecutive RB sets of PSSCH3.

In an example, since the total resource amount of PSSCH transmission three times is the same, some indication overhead may be saved. For example, when the overhead of the second part is partially saved, the example is as follows: the first part X indicates the number M of consecutive subchannels of PSSCH1, the subchannel starting location S1' of PSSCH2 and the number M1 of consecutive subchannels of PSSCH2, and the subchannel starting location S2' of PSSCH3 and the number M2 of consecutive subchannels of PSSCH3; the second part Y indicates the number L of consecutive RB sets of PSSCH1, the RB set starting location S1 of PSSCH2, and the RB set starting location S2 of PSSCH3.

In an embodiment, because there is a Listen Before Talk (LBT) failure on the spectrum unlicensed, RB sets of PSSCH transmission multiple times are likely the same; in this case, some overhead of the indication of the RB set information of the second part may be saved, and the example is as follows: the second part is only required to indicate the number L of consecutive RB sets and the RB set starting location S, and the number of consecutive RB sets for PSSCH transmission each time and the RB set starting location for the PSSCH transmission each time are the same.

In an embodiment, the first part is subchannel information of the PSSCH determined by an RB set, and the second part is interlace information of the PSSCH.

The frequency domain resource indication in the SCI is divided into two parts X' and Y'. X' indicates the subchannel information of each PSSCH determined by the base station or reserved by the transmitting UE, and Y' indicates the interlace information of each PSSCH determined by the base station or reserved by the transmitting UE. The corresponding subchannel is the physical resource blocks in the K4 RB sets on all the interlaces within the communication resource pool, and the entire communication resource pool includes the N4 subchannels with consecutive indexes in total.

The transmitting UE determines the three PSSCHs that are denoted as PSSCH1', PSSCH2', and PSSCH3' respectively, so the SCI of the transmitting UE includes the first part and the second part that are shown in the following examples.

In an example, the first part X' indicates the number M' of consecutive subchannels of PSSCH1', the subchannel starting location S1" of PSSCH2' and the number M1' of consecutive subchannels of PSSCH2', and the subchannel starting location S2" of PSSCH3' and the number M2' of consecutive subchannels of PSSCH3'; the second part Y' indicates the number L' of consecutive interlaces of PSSCH1', the interlace starting location S1' of PSSCH2' and the number L1' of consecutive interlaces of PSSCH2', and the interlace starting location S2' of PSSCH3' and the number L2' of consecutive interlaces of PSSCH3'.

In an example, since the total resource amount of PSSCH transmission three times is the same, some indication overhead may be saved. For example, when the overhead of the first part is partially saved, the example is as follows: the first part X' indicates the number M' of consecutive subchannels of PSSCH1', the subchannel starting location S1" of PSSCH2', and the subchannel starting location S2" of PSSCH3'; the second part Y' indicates the number L' of consecutive interlaces of PSSCH1', the interlace starting location S1' of PSSCH2' and the number L1' of consecutive interlaces of PSSCH2', and the interlace starting location S2' of PSSCH3' and the number L2' of consecutive interlaces of PSSCH3'.

In an example, since the total resource amount of PSSCH transmission three times is the same, some indication overhead may be saved. For example, when the overhead of the second part is partially saved, the example is as follows: the first part X' indicates the number M' of consecutive subchannels of PSSCH1', the subchannel starting location S1" of PSSCH2' and the number M1' of consecutive subchannels of PSSCH2', and the subchannel starting location S2" of PSSCH3' and the number M2' of consecutive subchannels of PSSCH3'; the second part Y' indicates the number L' of consecutive interlaces of PSSCH1', the interlace starting location S1' of PSSCH2', and the interlace starting location S2' of PSSCH3'.

In an embodiment, because there is a Listen Before Talk (LBT) failure on the spectrum unlicensed, RB sets of PSSCH transmission multiple times are likely the same; in this case, some overhead of the indication of the subchannel information of the first part may be saved, and the example is as follows: the first part is only required to indicate the number M' of consecutive subchannels and the subchannel starting location S', or the number of consecutive subchannels for PSSCH transmission each time and the subchannel starting location for the PSSCH transmission each time are the same.

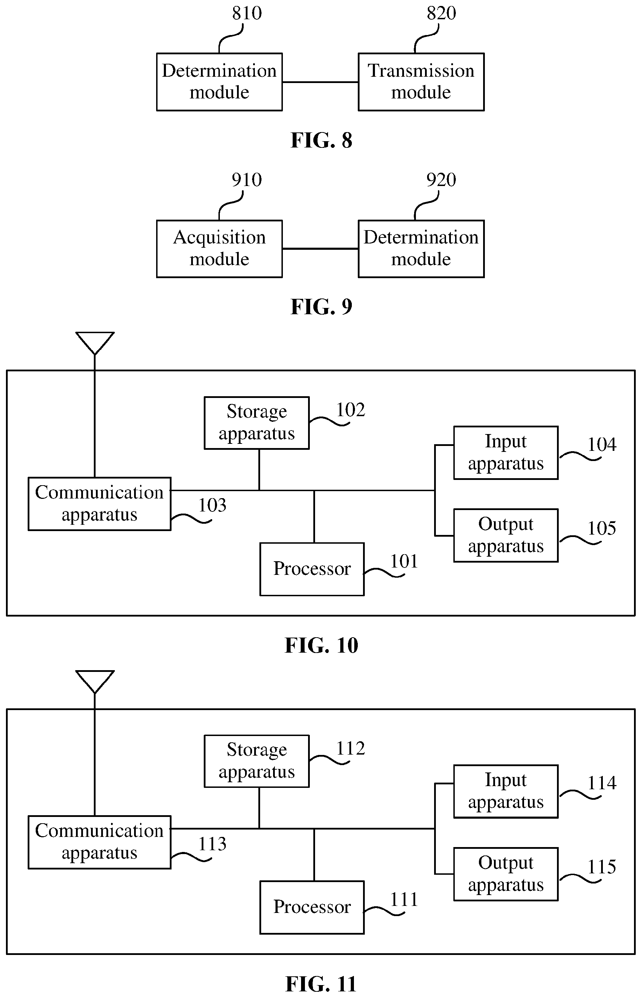

In an exemplary embodiment, the present application provides a resource indication apparatus. FIG. 8 is a schematic diagram illustrating the structure of a resource indication apparatus according to an embodiment of the present application. As shown in FIG. 8, the resource indication apparatus provided in the embodiment of the present application includes a determination module 810 and a transmission module 820.

The determination module 810 is configured to determine first indication information of a physical transmission resource and second indication information of the physical transmission resource, where the first indication information includes subchannel information of the physical transmission resource in a frequency domain, and the second indication information includes other frequency domain indication information of the physical transmission resource other than the first indication information in the frequency domain. The transmission module 820 is configured to transmit control information including the first indication information and the second indication information.

The resource indication apparatus provided in this embodiment is configured to perform the resource indication method of the embodiment shown in FIG. 6. The resource indication apparatus provided in this embodiment has similar implementation principles and technical effects to the resource indication method of the embodiment shown in FIG. 6, which are not repeated herein.

Based on the preceding embodiment, variant embodiments of the preceding embodiment are provided. For the brevity of description, only differences from the preceding embodiment are described in the variant embodiments.

In an embodiment, a subchannel is physical resource blocks on K1 interlaces in all the resource block sets within a communication resource pool, and the entire communication resource pool includes N1 subchannels with consecutive indexes in total; or a subchannel is physical resource blocks on K2 interlaces in one resource block set within a communication resource pool, and the entire communication resource pool includes N2 subchannels with consecutive indexes in total; or a subchannel is physical resource blocks in K3 resource block sets on one interlace within a communication resource pool, and the entire communication resource pool includes N3 subchannels with consecutive indexes in total; or a subchannel is physical resource blocks in K4 resource block sets within a communication resource pool, and the entire communication resource pool includes N4 subchannels with consecutive indexes in total, where K1, K2, K3, K4, N1, N2, N3, and N4 are all positive integers.

In an embodiment, one or more physical transmission resources are provided.

In an embodiment, the first indication information indicates subchannel information of a frequency domain of one physical transmission resource; or the first indication information indicates subchannel information of frequency domains of multiple physical transmission resources; or the second indication information indicates other frequency domain indication information of one physical transmission resource in the frequency domain; or the second indication information indicates other frequency domain indication information of each physical transmission resource among multiple physical transmission resources in the frequency domain; or the second indication information indicates other frequency domain indication information of a target physical transmission resource in the frequency domain, and other frequency domain indication information of multiple physical transmission resources is the same as the other frequency domain indication information of the target physical transmission resource in the frequency domain.

In an embodiment, one of the following supported by the communication resource pool is configured by a system network side, is preconfigured, or is predefined by the system:
one or more resource mapping manners for subchannels of the communication resource pool and an index numbering manner corresponding to each resource mapping manner; one or more resource mapping manners for L subchannels forming the physical transmission resource and an index numbering manner corresponding to each resource mapping manner; index consecutive state information of L subchannels forming the physical transmission resource, where the index consecutive state information includes the subchannel index consecutive state or the subchannel index non-consecutive state, and a subchannel index arrangement manner corresponding to each index consecutive state information; or one or more shapes of L subchannels forming the physical transmission resource and a subchannel index arrangement manner corresponding to each shape.

In an embodiment, the second indication information indicates one or more of the following: a resource mapping manner corresponding to subchannels forming the physical transmission resource; an index numbering manner corresponding to subchannels forming the physical transmission resource; the index consecutive state information corresponding to indexes of the L subchannels forming the physical transmission resource, where the index consecutive state information includes the subchannel index consecutive state or the subchannel index non-consecutive state; the one or more shapes corresponding to the L subchannels forming the physical transmission resource; the number of resource block sets occupied by the L subchannels forming the physical transmission resource; indexes of resource block sets occupied by the L subchannels forming the physical transmission resource; the number of interlaces occupied by the L subchannels forming the physical transmission resource; or indexes of interlaces occupied by the L subchannels forming the physical transmission resource.

In an embodiment, the second indication information performs an indication in a manner of a bit quantization indication or a bitmap.

In an embodiment, the first indication information indicates one of the following: the number of subchannels of a target physical transmission resource, the number of subchannels of each physical transmission resource among physical transmission resources other than the target physical transmission resource, and a subchannel index of a first subchannel of each physical transmission resource among the physical transmission resources other than the target physical transmission resource; a subchannel index of a first subchannel of all the physical transmission resources and the number of subchannels of all the physical transmission resources; the number of subchannels of a target physical transmission resource and a subchannel index of a first subchannel of each physical transmission resource among physical transmission resources other than the target physical transmission resource; a subchannel index of a first subchannel of a target physical transmission resource, the number of subchannels of the target physical transmission resource, and a subchannel index of a first subchannel of each physical transmission resource among physical transmission resources other than the target physical transmission resource; the number of subchannels of a target physical transmission resource; or a subchannel index of a first subchannel of a target physical transmission resource and the number of subchannels of the target physical transmission resource.

In an embodiment, the second indication information indicates one of the following: the number of resource block sets of a target physical transmission resource, the number of resource block sets of each physical transmission resource among physical transmission resources other than the target physical transmission resource, and a resource block set index of a first resource block set of each physical transmission resource among the physical transmission resources other than the target physical transmission resource; a resource block set index of a first resource block set of all the physical transmission resources and the number of resource block sets of a target physical transmission resource; the number of resource block sets of a target physical transmission resource and a resource block set index of a first resource block set of each physical transmission resource among physical transmission resources other than the target physical transmission resource; a resource block set index of a first resource block set of a target physical transmission resource, the number of resource block sets of the target physical transmission resource, and a resource block set index of a first resource block set of each physical transmission resource among physical transmission resources other than the target physical transmission resource; the number of resource block sets of a target physical transmission resource and a resource block set index of a first resource block set of the target physical transmission resource; or the number of resource block sets of a target physical transmission resource.

In an embodiment, the control information includes downlink control information or sidelink control information.

In an embodiment, the subchannel information includes one or more of the following: a subchannel index or the number of subchannels.

In an exemplary embodiment, an embodiment of the present application further provides a resource indication apparatus. The apparatus is integrated on a second node. FIG. 9 is another schematic diagram illustrating the structure of a resource indication apparatus according to an embodiment of the present application. The apparatus includes an acquisition module 910 and a determination module 920.

The acquisition module 910 is configured to acquire control information including first indication information and second indication information, where the first indication information includes subchannel information of a frequency domain of a physical transmission resource, and the second indication information includes other frequency domain indication information of the physical transmission resource other than the first indication information in the frequency domain. The determination module 920 is configured to determine the frequency domain location of the physical transmission resource based on the first indication information and the second indication information.

The resource indication apparatus provided in this embodiment is configured to perform the resource indication method of the embodiment shown in FIG. 7A. The resource indication apparatus provided in this embodiment has similar implementation principles and technical effects to the resource indication method of the embodiment shown in FIG. 7A, which are not repeated herein.

Based on the preceding embodiment, variant embodiments of the preceding embodiment are provided. For the brevity of description, only differences from the preceding embodiment are described in the variant embodiments.

In an embodiment, a subchannel is physical resource blocks on K1 interlaces in all the resource block sets within a communication resource pool, and the entire communication resource pool includes N1 subchannels with consecutive indexes in total; or a subchannel is physical resource blocks on K2 interlaces in one resource block set within a communication resource pool, and the entire communication resource pool includes N2 subchannels with consecutive indexes in total; or a subchannel is physical resource blocks in K3 resource block sets on one interlace within a communication resource pool, and the entire communication resource pool includes N3 subchannels with consecutive indexes in total; or a subchannel is physical resource blocks in K4 resource block sets within a communication resource pool, and the entire communication resource pool includes N4 subchannels with consecutive indexes in total, where K1, K2, K3, K4, N1, N2, N3, and N4 are all positive integers.

In an embodiment, one or more physical transmission resources are provided.

In an embodiment, the first indication information indicates subchannel information of a frequency domain of one physical transmission resource; or the first indication information indicates subchannel information of frequency domains of multiple physical transmission resources; or the second indication information indicates other frequency domain indication information of of one physical transmission resource in the frequency domain; or the second indication information indicates other frequency domain indication information of each physical transmission resource among multiple physical transmission resources in the frequency domain; or the second indication information indicates other frequency domain indication information of a target physical transmission resource in the frequency domain, and other frequency domain indication information of multiple physical transmission resources is the same as the other frequency domain indication information of the target physical transmission resource in the frequency domain.

In an embodiment, one of the following supported by the communication resource pool is configured by a system network side, is preconfigured, or is predefined by the system:
one or more resource mapping manners for subchannels of the communication resource pool and an index numbering manner corresponding to each resource mapping manner; one or more resource mapping manners for L subchannels forming the physical transmission resource and an index numbering manner corresponding to each resource mapping manner; index consecutive state information of L subchannels forming the physical transmission resource, where the index consecutive state information includes the subchannel index consecutive state or the subchannel index non-consecutive state, and a subchannel index arrangement manner corresponding to each index consecutive state information; or one or more shapes of L subchannels forming the physical transmission resource and a subchannel index arrangement manner corresponding to each shape.

In an embodiment, the second indication information indicates one or more of the following: a resource mapping manner corresponding to subchannels forming the physical transmission resource; an index numbering manner corresponding to subchannels forming the physical transmission resource; the index consecutive state information corresponding to indexes of the L subchannels forming the physical transmission resource, where the index consecutive state information includes the subchannel index consecutive state or the subchannel index non-consecutive state; the one or more shapes corresponding to the L subchannels forming the physical transmission resource; the number of resource block sets occupied by the L subchannels forming the physical transmission resource; indexes of resource block sets occupied by the L subchannels forming the physical transmission resource; the number of interlaces occupied by the L subchannels forming the physical transmission resource; or indexes of interlaces occupied by the L subchannels forming the physical transmission resource.

In an embodiment, the second indication information performs an indication in a manner of a bit quantization indication or a bitmap.

In an embodiment, the first indication information indicates one of the following: the number of subchannels of a target physical transmission resource, the number of subchannels of each physical transmission resource among physical transmission resources other than the target physical transmission resource, and a subchannel index of a first subchannel of each physical transmission resource among the physical transmission resources other than the target physical transmission resource; a subchannel index of a first subchannel of all the physical transmission resources and the number of subchannels of all the physical transmission resources; the number of subchannels of a target physical transmission resource and a subchannel index of a first subchannel of each physical transmission resource among physical transmission resources other than the target physical transmission resource; a subchannel index of a first subchannel of a target physical transmission resource, the number of subchannels of the target physical transmission resource, and a subchannel index of a first subchannel of each physical transmission resource among physical transmission resources other than the target physical transmission resource; the number of subchannels of a target physical transmission resource; or a subchannel index of a first subchannel of a target physical transmission resource and the number of subchannels of the target physical transmission resource.

In an embodiment, the second indication information indicates one of the following: the number of resource block sets of a target physical transmission resource, the number of resource block sets of each physical transmission resource among physical transmission resources other than the target physical transmission resource, and a resource block set index of a first resource block set of each physical transmission resource among the physical transmission resources other than the target physical transmission resource; a resource block set index of a first resource block set of all the physical transmission resources and the number of resource block sets of a target physical transmission resource; the number of resource block sets of a target physical transmission resource and a resource block set index of a first resource block set of each physical transmission resource among physical transmission resources other than the target physical transmission resource; a resource block set index of a first resource block set of a target physical transmission resource, the number of resource block sets of the target physical transmission resource, and a resource block set index of a first resource block set of each physical transmission resource among physical transmission resources other than the target physical transmission resource; the number of resource block sets of a target physical transmission resource and a resource block set index of a first resource block set of the target physical transmission resource; or the number of resource block sets of a target physical transmission resource.

In an embodiment, the control information includes downlink control information or sidelink control information.

In an embodiment, the subchannel information includes one or more of the following: a subchannel index or the number of subchannels.

In an exemplary embodiment, the present application provides a first node. FIG. 10 is a schematic diagram illustrating the structure of a first node according to an embodiment of the present application. As shown in FIG. 10, the first node provided in the present application includes one or more processors 101 and a storage apparatus 102. One or more processors 101 may be provided in the first node. In FIG. 10, one processor 101 is used as an example. The storage apparatus 102 is configured to store one or more programs. When executed by the one or more processors 101, the one or more programs cause the one or more processors 101 to perform the resource indication method according to the embodiment of the present application.

The first node further includes a communication apparatus 103, an input apparatus 104, and an output apparatus 105.

The one or more processors 101, the storage apparatus 102, the communication apparatus 103, the input apparatus 104, and the output apparatus 105 in the first node may be connected via a bus or other means, with connection via the bus as an example in FIG. 10. The input apparatus 104 may be configured to receive inputted digital or character information and generate key signal input related to user settings and function control of the first node. The output apparatus 105 may include a display device such as a display screen.

The communication apparatus 103 may include a receiver and a sender. The communication apparatus 103 is configured to perform information transceiving communications under the control of the processor 101.

As a computer-readable storage medium, the storage apparatus 102 may be configured to store software programs, computer-executable programs and modules, such as program instructions/modules (for example, the determination module 810 and the transmission module 820 in the resource indication apparatus) corresponding to the resource indication method according to the embodiment of the present application. The storage apparatus 102 may include a program storage region and a data storage region. The program storage region may store an operating system and an application program required by at least one function. The data storage region may store data created depending on use of the first node. In addition, the storage apparatus 102 may include a high-speed random-access memory and may further include a nonvolatile memory such as at least one disk memory, a flash memory, or another nonvolatile solid-state memory. In some examples, the storage apparatus 102 may include memories which are remotely disposed with respect to the processor 101. These remote memories may be connected to the first node via a network. Examples of the network include, but are not limited to, the Internet, an intranet, a local area network, a mobile communication network, and a combination thereof.

In an exemplary embodiment, the present application provides a second node. FIG. 11 is a schematic diagram illustrating the structure of a second node according to an embodiment of the present application. As shown in FIG. 11, the second node provided in the present application includes one or more processors 111 and a storage apparatus 112. One or more processors 111 may be provided in the second node. In FIG. 11, one processor 111 is used as an example. The storage apparatus 112 is configured to store one or more programs. When executed by the one or more processors 111, the one or more programs cause the one or more processors 111 to perform the resource indication method according to the embodiment of the present application.

The second node further includes a communication apparatus 113, an input apparatus 114, and an output apparatus 115.

The one or more processors 111, the storage apparatus 112, the communication apparatus 113, the input apparatus 114, and the output apparatus 115 in the second node may be connected via a bus or other means, with connection via the bus as an example in FIG. 11.

The input apparatus 114 may be configured to receive inputted digital or character information and generate key signal input related to user settings and function control of the second node. The output apparatus 115 may include a display device such as a display screen.

The communication apparatus 113 may include a receiver and a sender. The communication apparatus 113 is configured to perform information transceiving communications under the control of the processor 111.

As a computer-readable storage medium, the storage apparatus 112 may be configured to store software programs, computer-executable programs and modules, such as program instructions/modules (for example, the acquisition module 910 and the determination module 920 in the resource indication apparatus) corresponding to the resource indication method according to the embodiment of the present application. The storage apparatus 112 may include a program storage region and a data storage region. The program storage region may store an operating system and an application program required by at least one function. The data storage region may store data created depending on use of the second node. In addition, the storage apparatus 112 may include a high-speed random-access memory and may further include a nonvolatile memory such as at least one disk memory, a flash memory, or another nonvolatile solid-state memory. In some examples, the storage apparatus 112 may include memories which are remotely disposed with respect to the processor 111. These remote memories may be connected to the second node via a network. Examples of the network include, but are not limited to, the Internet, an intranet, a local area network, a mobile communication network, and a combination thereof.

An embodiment of the present application further provides a storage medium storing a computer program that, when executed by a processor, causes the processor to perform any method according to the present application. The storage medium stores a computer program that, when executed by a processor, causes the processor to perform any resource indication method according to the embodiments of the present application. For example, a resource indication method applied to a first node and a resource indication method applied to a second node are provided. The resource indication method applied to the first node includes determining first indication information of a physical transmission resource and second indication information of the physical transmission resource, where the first indication information includes subchannel information of the physical transmission resource in a frequency domain, and the second indication information includes other frequency domain indication information of the physical transmission resource other than the first indication information in the frequency domain; transmitting control information including the first indication information and the second indication information.

The resource indication method applied to the second node includes acquiring control information including first indication information and second indication information, where the first indication information includes subchannel information of a frequency domain of a physical transmission resource, and the second indication information includes other frequency domain indication information of the physical transmission resource other than the first indication information in the frequency domain; determining the frequency domain location of the physical transmission resource based on the first indication information and the second indication information.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of the present application and are not intended to limit the scope of the present application.

It is to be understood by those skilled in the art that the term "terminal device" encompasses any appropriate type of radio user device such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A resource indication method, the method being applied to a first node and comprising:
determining first indication information of a physical transmission resource and second indication information of the physical transmission resource, wherein the first indication information comprises subchannel information of the physical transmission resource in a frequency domain,
and the second indication information comprises other frequency domain indication information of the physical transmission resource other than the first indication information in the frequency domain; and
transmitting control information comprising the first indication information and the second indication information.

2. The resource indication method according to claim 1, wherein
a subchannel is physical resource blocks on K1 interlaces in all resource block sets within a communication resource pool, and the entire communication resource pool comprises N1 subchannels with consecutive indexes in total; or
a subchannel is physical resource blocks on K2 interlaces in one resource block set within a communication resource pool, and the entire communication resource pool comprises N2 subchannels with consecutive indexes in total; or
a subchannel is physical resource blocks in K3 resource block sets on one interlace within a communication resource pool, and the entire communication resource pool comprises N3 subchannels with consecutive indexes in total; or
a subchannel is physical resource blocks in K4 resource block sets within a communication resource pool, and the entire communication resource pool comprises N4 subchannels with consecutive indexes in total,
wherein K1, K2, K3, K4, N1, N2, N3, and N4 are all positive integers.

3. The resource indication method according to claim 1, wherein at least one physical transmission resource is provided.

4. The resource indication method according to claim 3, wherein
the first indication information is configured to indicate subchannel information of one physical transmission resource of the at least one physical transmission resource in the frequency domain; or
the first indication information is configured to indicate subchannel information of a plurality of physical transmission resources of the at least one physical transmission resource in the frequency domain; and
the second indication information is configured to indicate other frequency domain indication information of one physical transmission resource of the at least one physical transmission resource in the frequency domain; or
the second indication information is configured to indicate other frequency domain indication information of each physical transmission resource among a plurality of physical transmission resources of the at least one physical transmission resource in the frequency domain; or
the second indication information is configured to indicate other frequency domain indication information of a target physical transmission resource of the at least one physical transmission resource in the frequency domain, and other frequency domain indication information of a plurality of physical transmission resources of the at least one physical transmission resource is the same as the other frequency domain indication information of the target physical transmission resource in the frequency domain.

5. The resource indication method according to claim 1, wherein one of the following supported by a communication resource pool is configured by a system network side, is preconfigured, or is predefined by a system:
at least one resource mapping manner for a subchannel of the communication resource pool and an index numbering manner corresponding to each of the at least one resource mapping manner;
at least one resource mapping manner for L subchannels forming the physical transmission resource and an index numbering manner corresponding to each of the at least one resource mapping manner;
index consecutive state information of L subchannels forming the physical transmission resource, wherein the index consecutive state information comprises a subchannel index consecutive state or a subchannel index non-consecutive state, and a subchannel index arrangement manner corresponding to each of the index consecutive state information; or
at least one shape of L subchannels forming the physical transmission resource and a subchannel index arrangement manner corresponding to each of the at least one shape.

6. The resource indication method according to claim 5, wherein the second indication information is configured to indicate at least one of the following:
a resource mapping manner corresponding to subchannels forming the physical transmission resource;
an index numbering manner corresponding to subchannels forming the physical transmission resource;
the index consecutive state information corresponding to indexes of the L subchannels forming the physical transmission resource, wherein the index consecutive state information comprises the subchannel index consecutive state or the subchannel index non-consecutive state;
the at least one shape corresponding to the L subchannels forming the physical transmission resource;
a number of resource block sets occupied by the L subchannels forming the physical transmission resource;
indexes of resource block sets occupied by the L subchannels forming the physical transmission resource;
a number of interlaces occupied by the L subchannels forming the physical transmission resource; or
indexes of interlaces occupied by the L subchannels forming the physical transmission resource.

7. The resource indication method according to claim 1, wherein the second indication information is configured to perform an indication in a manner of a bit quantization indication or a bitmap.

8. The resource indication method according to claim 1, wherein the first indication information is configured to indicate at least one of the following:
a number of subchannels of a target physical transmission resource, a number of subchannels of each physical transmission resource among physical transmission resources other than the target physical transmission resource, and a subchannel index of a first subchannel of each physical transmission resource among the physical transmission resources other than the target physical transmission resource;
a subchannel index of a first subchannel of all physical transmission resources and a number of subchannels of all the physical transmission resources;
a number of subchannels of a target physical transmission resource and a subchannel index of a first subchannel of each physical transmission resource among physical transmission resources other than the target physical transmission resource;
a subchannel index of a first subchannel of a target physical transmission resource, a number of subchannels of the target physical transmission resource, and a subchannel index of a first subchannel of each physical transmission resource among physical transmission resources other than the target physical transmission resource;
a number of subchannels of a target physical transmission resource; or
a subchannel index of a first subchannel of a target physical transmission resource and a number of subchannels of the target physical transmission resource.

9. The resource indication method according to claim 1, wherein the second indication information is configured to indicate at least one of the following:
a number of resource block sets of a target physical transmission resource, a number of resource block sets of each physical transmission resource among physical transmission resources other than the target physical transmission resource, and a resource block set index of a first resource block set of each physical transmission resource among the physical transmission resources other than the target physical transmission resource;
a resource block set index of a first resource block set of all physical transmission resources and a number of resource block sets of a target physical transmission resource;
a number of resource block sets of a target physical transmission resource and a resource block set index of a first resource block set of each physical transmission resource among physical transmission resources other than the target physical transmission resource;
a resource block set index of a first resource block set of a target physical transmission resource, a number of resource block sets of the target physical transmission resource, and a resource block set index of a first resource block set of each physical transmission resource among physical transmission resources other than the target physical transmission resource;
a number of resource block sets of a target physical transmission resource and a resource block set index of a first resource block set of the target physical transmission resource; or
a number of resource block sets of a target physical transmission resource.

10. The resource indication method according to claim 1, wherein
the control information comprises downlink control information or sidelink control information

11. The resource indication method according to claim 1, wherein the subchannel information comprises at least one of:
a subchannel index or a number of subchannels.

12. A resource indication method, the method being applied to a second node and comprising:
acquiring control information comprising first indication information and second indication information, wherein the first indication information comprises subchannel information of a frequency domain of a physical transmission resource, and the second indication information comprises other frequency domain indication information of the physical transmission resource other than the first indication information in the frequency domain; and
determining a frequency domain location of the physical transmission resource based on the first indication information and the second indication information.

13. A first node, comprising:
at least one processor; and
a storage apparatus configured to store at least one program,
wherein the at least one program, when executed by the at least one processor, is configured to cause the at least one processor to perform the resource indication method according to any one of claims 1 to 11.

14. A second node, comprising:
at least one processor; and
a storage apparatus configured to store at least one program,
wherein the at least one program, when executed by the at least one processor, is configured to cause the at least one processor to perform the resource indication method according to claim 12.

15. A storage medium storing a computer program that, when executed by a processor, is configured to cause the processor to perform the resource indication method according to any one of claims 1 to 12.
